# EUROPEAN PATENT APPLICATION

(11) **EP 4 556 534 A1**
(43) Date of publication of application: **21.05.2025**
(21) Application number: 23210325.9
(22) Date of filing: 16.11.2023
(51) Int. Cl.: C09D 5/03

(54) **COATING COMPOSITION**

(71) Applicant: Jotun A/S, 3202 Sandefjord (NO)
(72) Inventor: TIAN, Xinlong, Sandefjord, N-3202 (NO); ZHAO, Weiguo, Sandefjord, N-3202 (NO)
(74) Representative: Marks & Clerk LLP

(57) **Abstract**

The present invention provides a powder coating composition, preferably an intumescent powder coating composition, comprising:
(i) a binder system comprising a binder and a curing agent;
(ii) an intumescent component comprising an acid-generating agent, preferably ammonium polyphosphate, and optionally an expansion agent and/or a carbon donor compound; and
(iii) a charging agent comprising carbon fiber.

## Description

### INTRODUCTION

The present invention relates to a powder coating composition, and preferably an intumescent powder coating composition, comprising a binder system, an intumescent component and a charging agent comprising carbon fiber. The invention also relates to a container containing the composition and to a method of making the composition. Additionally the invention relates to a coating comprising the composition, a substrate coated with the composition and to methods of coating a substrate with the composition.

The present invention also relates to a coating system comprising a primer layer, an intumescent layer, and a topcoat layer, wherein the intumescent layer comprises the powder coating composition as described above. The invention also relates to methods of coating a substrate with the coating system, and to a kit for preparing the coating system.

Moreover, the present invention relates to a battery pack comprising a battery assembly, wherein the battery pack has a coating formed on at least one surface formed from the coating system. The use of the coating system to form a fire retardant and/or heat insulating coating on at least one surface of a battery pack forms a further aspect of the invention.

### BACKGROUND

Electric vehicles have been one of the fastest growing industries in the last few years, driven by an increased demand for more environmentally friendly transportation, in particular a reduction in CO₂ emissions. The battery is the heart of the electric car.

Electric vehicles, such as electric cars, typically comprise a battery pack, which is an assembly comprising many battery cells. The battery cells may be arranged in different configurations, but are interconnected to provide the overall battery assembly. Conventionally the battery pack comprises the battery assembly as well as modules and fixtures for holding the battery cells.

One of the main risks associated with electric vehicles is fire. Fires can arise if, for example, the vehicle is in an accident or an electrical failure occurs. In this scenario, the battery pack may catch fire, bursting into flames. Damaged cells in a battery assembly of a battery pack may also experience an uncontrolled increase in temperature and pressure in an effect called "thermal runaway".

Naturally, electric vehicle manufacturers are developing technologies to reduce the risks associated with battery pack fires and thermal runaway. These include coatings for the battery pack and/or components of the battery pack to reduce the risk of flames spreading in the event of a fire and heat transfer in the event of thermal runaway. Such coatings can, for example, increase the time available for passengers to escape from a vehicle, before a catastrophic event occurs. At the same time, however, there is an increase in demand for energy density in batteries for use in the vehicle industry, and this means that space inside the battery pack is limited. There is a clear tension between providing effective fire resistant coverings for battery packs, and the desire to minimise their size.

None of the solutions currently available on the market are ideal. Heat and fire resistant materials such as mica sheets, glass fibre sheets, ceramic blankets can only provide partial coverage of the battery pack. Glues tend to be provided in liquid form and it is a challenge to manufacture consistent coatings of suitable thickness in practical time frames, e.g. avoid long drying times. Solvent-based liquid intumescent coatings are fundamentally not ideal due to the presence of environmentally harmful VOCs therein, and critically need significant space to expand (e.g. 50-100 times original thickness) to be effective in resisting the spread of a fire.

Powder coatings are environmentally friendly, with zero VOCs. Additionally, intumescent powder coatings tend to require significantly less space, e.g. 10-30 times original thickness, to achieve fire resistance. The challenge with intumescent powder coatings is that they need to be applied in a minimum thickness of 150 µm, and more ideally up to 700 µm, and sometimes even 850 µm, to provide the required fire resistance. The need for high coating thickness is due to the fact that, on the one hand, relatively higher amounts of materials are needed to compensate for the relatively decreased expansion that occurs upon contact with fire and, on the other hand, also to protect against heat transfer to the substrate. The exact thickness required depends on *inter alia* the level of fire resistance required, e.g. how long it needs to give effect, and the materials present in the coating.

Traditional powder coating compositions are normally applied in a coating thickness of 150-200 µm with a corona charged gun, with a very low first pass powder deposition rate, which means that significant amounts of powder coating falls off the substrate being coated. When the powder is recycled via the recycle system, it tends to be broken into finer particles, which leads to a lower degree of powder utilisation as it is difficult to stick powder with particle size below 10 µm onto a substrate. Moreover, as a charged powder coating has been deposited on a substrate, an electric field builds up, which will repel later applied powder from sticking to the already deposited powder, and at some point, no more powder can be deposited on the substrate. This is called back ionisation. As a result, to achieve thick powder coatings of around 700 µm or more, it is often necessary to utilise multiple spraying and curing cycles, but this is time and energy consuming. Some charging agents, e.g. polyethylene glycol, may be employed to improve the coating thickness achieved in each spray step, but their effect is limited. It is clearly desirable to apply coatings in as few steps as possible and ideally in a single step, given the time and energy efficiency this achieves.

Additionally, both the interior and exterior of a battery pack is exposed to high temperatures and high humidity during normal operation. Thus another challenge for powder coatings for this application is the provision of fire resistance, despite exposure to water (e.g. brine, and high temperature water). Finally, the powder coating ideally should protect the metal present in the battery pack from corrosion over the service life of the battery, which may be 10 years.

### SUMMARY OF THE INVENTION

Viewed from a first aspect, the present invention provides a powder coating composition, preferably an intumescent powder coating composition, comprising:
(i) a binder system comprising a binder and a curing agent;
(ii) an intumescent component comprising an acid-generating agent, preferably ammonium polyphosphate, and optionally an expansion agent and/or a carbon donor compound; and
(iii) a charging agent comprising carbon fiber.

Viewed from a further aspect, the present invention provides a method for preparing a powder coating composition, and preferably an intumescent powder coating composition, as hereinbefore described comprising:
(i) blending a binder system comprising a binder and a curing agent, an intumescent component comprising an acid-generating agent, preferably ammonium polyphosphate, and optionally an expansion agent and/or a carbon donor compound, and a charging agent comprising carbon fiber, to form a mixture; and
(ii) extruding said mixture to form particles.

Viewed from a further aspect, the present invention provides use of a powder coating composition, and preferably an intumescent powder coating composition, as hereinbefore defined, to coat a substrate, preferably a metal substrate, and still more preferably a metal substrate pre-coated with a primer layer.

Viewed from a further aspect, the present invention provides a method for coating a substrate, preferably a metal substrate, with a powder coating composition, preferably an intumescent powder coating composition, as hereinbefore defined, comprising:
(i) applying a powder coating composition as hereinbefore defined to said substrate, wherein said substrate is preferably pre-coated with a primer layer; and
(ii) curing said powder coating composition to form a layer, preferably an intumescent layer.

Viewed from a further aspect, the present invention provides a coating, preferably a cured coating, comprising a powder coating composition, and preferably an intumescent powder coating composition, as hereinbefore defined.

Viewed from a further aspect, the present invention provides a substrate, preferably a metal substrate, coated with a powder coating composition, and preferably an intumescent powder coating composition, as hereinbefore defined or a coating as hereinbefore defined.

Viewed from a further aspect, the present invention provides use of a powder coating composition, and preferably an intumescent powder coating composition, as hereinbefore defined, in a coating system.

Viewed from a further aspect, the present invention provides a method for coating a substrate, preferably a metal substrate, with a coating system comprising:
(i) applying a primer composition, preferably a powder primer composition, to said substrate and curing said composition to form a primer layer;
(ii) applying an intumescent powder coating composition as hereinbefore defined to said primer layer and curing said composition to form an intumescent layer; and
(iii) applying a topcoat composition, preferably a powder topcoat composition, to said intumescent layer and curing to form a topcoat layer.

Viewed from a further aspect, the present invention provides a coating system comprising, preferably consisting, of three layers, wherein said coating system comprises:
(i) a primer layer, formed on a substrate, preferably a metal substrate;
(ii) an intumescent layer, formed on said primer layer, comprising a powder coating composition as hereinbefore defined; and
(iii) a topcoat layer, formed on said intumescent layer.

Viewed from a further aspect, the present invention provides a kit for preparing a coating system as hereinbefore defined, comprising:
(i) a first container containing a primer composition, preferably a powder primer composition;
(ii) a second container containing an intumescent powder coating composition as hereinbefore defined; and
(iii) a third container containing a topcoat composition, preferably a powder topcoat composition.

Viewed from a further aspect, the present invention provides a battery pack comprising a battery assembly, wherein said battery pack has a coating formed on at least one surface, preferably an interior surface, and said coating is formed from a coating system as hereinbefore defined.

Viewed from a further aspect, the present invention provides use of a coating system as hereinbefore defined to form a fire retardant and/or heat insulating coating on a least one surface, and preferably an interior surface, of a battery pack, preferably an electric vehicle battery pack.

### DEFINITIONS

As used herein the term "powder coating composition" refers to dry, free flowing powder which when applied to a surface and heated, e.g. cured, forms a coating thereon. Typically the particles that constitute the powder have an average diameter of 10-120 µm.

As used herein the terms "fire-resistant" or "fireproof" coating refer to a coating able to stop or limit the speed of fire spreading. One mechanism by which the coatings herein operate is to insulate the underlying substrate from heat, i.e. from heat transfer when exposed to a flame or high temperature to protect the substrate from exceeding a certain temperature or losing mechanical strength. The coatings are therefore also described as providing heat insulation.

As used herein, the term "binder system" refers to the total combination of binder(s) and curing agent(s) present in a coating composition.

As used herein the term "curing agent" refers to a compound which, when mixed with the binder, produces a cured or hardened coating by generating cross-links within the polymer when heated. Sometimes curing agents are referred to as hardeners.

As used herein the terms "curing accelerator", "accelerator" and "catalyst" are used synonymously and refer to compounds which increase the rate of the curing reaction to cure or harden the coating.

As used herein the term "epoxy" refers to a three-atom cyclic ether.

As used herein the term "epoxy-based" refers to a polymer or oligomer comprising epoxy groups and/or modified epoxy groups. The epoxy binder will comprise at least some epoxy groups. The term epoxy is used interchangeably with epoxide.

As used herein the term "solid epoxy resin" refers to an epoxy polymer that is solid at ambient temperature and pressure (25 °C and 1 atm). Thus the term "solid" refers to the physical state of the epoxy-based binder.

As used herein, the phrase "epoxy equivalent weight" or "EEW" refers to the number of grams of epoxy resin required to give 1 mole of epoxy groups. It is measured by ASTM D-1652.

As used herein, the terms "polyester having carboxy functional groups", "carboxylic acid polyester" and "carboxylated polyester" refer to a polymer comprising ester (-COO-) linker groups and having COOH groups.

As used herein, the term "AV" or "acid value" refers to the number of mg KOH required to neutralize the alkali-reactive groups in 1 g of polymer and has the units (mg KOH/g polymer). The acid value can be determined according to ASTM standard test method D974.

As used herein the term "intumescent component" refers to one or more compounds which contribute to fire-resistance and heat insulation. Preferably the intumescent component comprises compounds that swell when exposed to heat and create a barrier layer that insulates the structure underlying the coating from fire.

As used herein the term acid-generating compound refers to a compound that decomposes to provide acid. It may also be called acid catalyst.

As used herein the term expansion agent refers to a compound that produces, usually by decomposition, a gas. It is used interchangeably with the term blowing agent.

As used herein, the term "carbon donor compound" refers to a compound that reacts with acid to form a carbonaceous char.

As used herein the term "charging agent" refers to a material that can reduce the electric field formed by deposited powder and thus reduce the repletion of the later applied powder to allow more powder to deposit on the substrate to achieve higher dry film build.

As used herein, the term "carbon fiber" refers to a bundle of crystalline carbon filaments, wherein each filament is in the form a needle, typically with a diameter of 5-10 µm. Typically, carbon filaments, and therefore carbon fibers, consist of carbon.

As used herein, the term "coating system" refers to a multi-layered coating.

As used herein, the term "primer layer" refers to a coating layer which is in direct contact with, and which adheres to, a substrate.

As used herein, the term "topcoat layer" refers to a coating layer which is the outermost or final layer.

As used herein the term "filler" refers to solid particles. Typically, fillers are incorporated into powder coating compositions to increase their volume. Sometimes fillers are referred to as "extenders".

As used herein the term "degassing agent" refers to a compound that is added to a composition to remove gases, e.g. air, water vapor and/or promote dissolution of gases so as to avoid the formation of pinholes and bubbles in the coating once formed.

As used herein the term "levelling agent" refers to a compound that is added to powder coating compositions to facilitate powder flow during melting stage, e.g. by disrupting weak bonding between particles within the powder and/or by lubricating movement.

As used herein the term "flow additive" or "flow agent" refers to a compound that is added to powder coating compositions to reduce surface tension and reduce surface imperfections, e.g. craters, pinholes and fish eyes, and increase the surface smoothness.

As used herein the term "colour pigment" is a pigment that is added to a composition to give colour. Colour pigments include white pigments, such as TiO₂.

As used herein the term "rheology modifier" refers to a compound which improves the uniformity of consistency, and application properties, of a coating composition.

As used herein the term "reinforcing material" refers to a material that normally could enhance the film robustness when the coating file start to expand when the coating is under high temperature or fire thus to give longer protection of the substrate.

As used herein the term "molecular weight" refers to weight average molecular weight (Mw), unless otherwise specified.

As used herein the term "spherical", when used in relation to particles encompasses substantially spherical and spherical particles. Substantially spherical particles are identical in size in each of the x, y and z dimensions, ± 1.2 mm, more preferably ± 0.6 mm.

As used herein the term "average diameter" refers to the Z-average diameter size as determined by ISO 22412:2017 using a Malvern Mastersizer 3000.

As used herein the term D₅₀ refers to the size at which 50% of the particles have a diameter smaller than the value recited.

As used herein the term "weight % (wt%)", when used in relation to compositions, e.g. coating compositions, refers to the weight of individual constituents of a composition relative to the total weight of the composition, unless otherwise specified. The total wt% of any given coating composition is 100 wt%.

### DETAILED DESCRIPTION OF THE INVENTION

The present invention relates to a powder coating composition and preferably an intumescent powder coating composition, comprising:
(i) a binder system comprising a binder and a curing agent;
(ii) an intumescent component comprising an acid-generating agent, preferably ammonium polyphosphate, and optionally an expansion agent and/or a carbon donor compound; and
(iii) a charging agent comprising carbon fiber.

The powder coating composition of the present invention advantageously produces coatings that can be applied to a coating thickness of up to 850 µm in a single application. In other words the powder coating composition of the present invention can be applied using a corona gun, or a combination of a corona gun and a positively charged gun, and then cured in a single step to provide thick coatings. This is highly beneficial. Traditional powder coating compositions can normally only be applied up to a coating thickness of 150-200 µm using a corona charged gun, and in order to achieve higher coating thicknesses, e.g. 700 µm, multiple spray and curing cycles must be used. However, it has surprisingly been found that the presence of carbon fiber as a charging agent in the powder coating compositions of the invention overcomes this problem. It is believed that the carbon fiber removes charge on the deposited powder very quickly and allows powder coatings to be applied up to 850 µm in thickness with one spray and cure process. Accordingly, productivity is increased, and energy savings can be achieved as less spraying and heating is needed.

A further advantage of the powder coating composition of the present invention is that it forms coatings which, when exposed to heat and/or fire, expand to a modest extent, yet still provide fire resistance. Thus the coatings of the present invention may expand to 10-30 times of their original film thickness, in contrast to 50 to 100 times typically seen for liquid intumescent coatings. This is especially advantageous when the coatings are used in e.g. a battery pack where the space available for the coating and its expansion is very limited.

When a powder coating composition of the present invention is applied at a coating thickness of 150-850 µm on a metal substrate and is exposed to a butane flame, typically having a temperature of 800-1200 °C, for 30 minutes, the temperature of the back side of the metal substrate will not exceed 400 °C. The powder coating therefore functions as a metal protection coating, by preventing the temperature of the metal increasing too high and/or stopping the metal from melting when there is a fire or high temperature.

A yet further advantage of the powder coating compositions and coatings of the present invention is that, when present in a coating system, the system is able to withstand exposure to water, including salt water and high temperature water. This is particularly important when the coating system is employed in, e.g. EV battery packs, where the battery pack is typically exposed to both high temperature and high humidity conditions in everyday use. It is critical that the coating does not degrade in such conditions, given the life span expected for an EV battery is typically 10 years or more.

### Powder coating composition

The powder coating composition of the present invention comprises a binder system comprising a binder and a curing agent. The amount of binder system, i.e. binder and curing agent combined, present in the powder coating composition of the present invention is preferably 35-67 wt%, more preferably 40-60 wt%, and still more preferably 50-60 wt%, based on the total weight of the powder coating composition.

Preferably the binder is selected from epoxy resin, polyester resin, or combinations thereof.

When the binder comprises epoxy resin, the curing agent is preferably DICY or OTB.

In one embodiment, when the binder comprises polyester resin, the curing agent is preferably epoxy resin.

In another embodiment, when the binder comprises polyester resin, the curing agent is preferably triglycidyl isocyanurate (TGIC) or β-hydroxy alkyl amide (HAA).

### Epoxy resin

The powder coating composition of the present invention may comprise an epoxy resin. The epoxy resin is preferably a solid epoxy resin.

Preferred epoxy resins present in the powder coating compositions of the present invention have an epoxy equivalent weight (EEW) of 190-1950 g/eq, and more preferably 380 to 1000 g/eq.

There are two main categories of epoxy resins, glycidyl epoxy resins and non-glycidyl epoxy resins. Some classes of glycidyl epoxy resins include glycidyl-ether epoxy resins, glycidyl-ester epoxy resins and glycidyl-amine epoxy resins. Some classes of non-glycidyl epoxy resins include aliphatic epoxy resin and cycloaliphatic epoxy resin.

Preferably the solid epoxy resin present in the powder coating composition of the present invention comprises a glycidyl epoxy resin and more preferably a glycidyl-ether epoxy resin. Glycidyl-ether epoxy resins are generally prepared via a condensation reaction of a dihydroxy compound and epichlorohydrin. Preferably the dihydroxy compound is a bisphenol compound. Thus, preferably the epoxy resin is a bisphenol-based epoxy resin.

Representative examples of solid epoxy resins suitable for use in the powder coating composition of the invention include bisphenol A based epoxy resins, bisphenol F based epoxy resins, novolac-modified bisphenol A based epoxy resin, isocyanate modified bisphenol A epoxy resin, cresol novolac type epoxy resin, O-cresol epoxy resin, silane modified bisphenol A epoxy resin, rubber modified bisphenol A epoxy resin, silicone modified bisphenol A epoxy resin, halogenated bisphenol A epoxy resin, and mixtures thereof. In preferred powder coating compositions, the solid epoxy resins are selected from bisphenol A based epoxy resins, bisphenol F based epoxy resins, novolac-modified bisphenol A based epoxy resin, isocyanate modified bisphenol A epoxy resin, cresol novolac type epoxy resin, O-cresol epoxy resin, brominated bisphenol A epoxy resin and mixtures thereof. In particularly preferred powder coating compositions, the solid epoxy resins are selected from bisphenol A based epoxy resins, novolac-modified bisphenol A based epoxy resin, bisphenol F epoxy resin, isocyanate modified bisphenol A epoxy resin, brominated bisphenol A epoxy resin and mixtures thereof. Bisphenol A based epoxy resin, novolac-modified bisphenol A based epoxy resin and mixtures thereof are particularly preferred.

Preferred solid epoxy resins, e.g. bisphenol A based epoxy resins, novolac-modified bisphenol A based epoxy resins, present in the powder coating compositions of the present invention have an equivalent epoxy weight (EEW) of 190-1950 g/eq, preferably 190 - 1300 g/eq, more preferably 380 - 1300 g/eq, and still more preferably from 380 to 1000 g/eq. It is believed that the EEW plays an important role in the performance of the coating. Epoxy resin having a relatively lower EEW tends to have a lower viscosity and better wetting properties, and thereby better adhesion, but too low EEW gives rise to sagging and/or bubbles in the final coating. On the other hand, epoxy resin with a relatively high EEW tends to slow down degassing of the air in the coating as it cures. Moreover, if the EEW of the epoxy resin is too low or too high, the composition is challenging to process during coating and the final coating produced from the composition tends to have a poor appearance.

Suitable epoxy resins for use in the powder coating composition of the present invention are available commercially. Representative examples of suitable epoxy resins include KD-213, KD-214C, KD-242K, KD-2200, KD-242G, KD-243G, KD-2103, KD-214M, KD-2203, KD-2104, KD214L, KD-9002, KD-9003, KD-9004, KD-213C, KD-213H, YDB-400, D.E.R 6805, NPCN-704, D.E.R. 6224, D.E.R. 6225, D.E.R. 662E, KD-211G, D.E.R. 662UH, D.E.R. 6635, D.E.R. 663U, D.E.R. 663UE, D.E.R. 664, D.E.R. 664U, D.E.R. 664UE, D.E.R. 672U D.E.R. 6510HT, YDCN-500-90P, BE501H, BE502L, BE502, BE503L, BE503, BE504, BE504H, BE505H, BE507, BEB-400YD-017, BE574P, BFE107, MOE-380, MOE-400, CNE202, CNE220, CNE220H, BE502S, BE503S, NPES-901, NPES-901H, NPES-902, NPES-902H, NPES-903K, NPES-903, NPES-903H, NPES-904, NPES-303, NPES-904H, NPES-304, NPEB-400, NPES-907, NPCN-704 and NPER-450.

The amount of epoxy resin present in the powder coating composition of the present invention, e.g. when present in a pure epoxy binder system, is preferably 30-66 wt%, more preferably 43-62 wt%, and still more preferably 46-58 wt%, based on the total weight of the powder coating composition.

### Epoxy curing agent

The powder coating composition of the present invention comprises a curing agent. When the binder present in the binder system comprises epoxy resin, the curing agent reacts with the epoxy resin during curing to form a coating, e.g. a film coating. The curing agent therefore facilitates the provision of a coating composition with an acceptable cure time.

When the binder present in the binder system comprises epoxy resin, the curing agent present in the powder coating composition preferably comprises dicyandiamide (DICY) or its derivatives, o-tolyl biguanide (OTB), phenolic hardener, acid anhydrides, an imidazole, imidazoline or imidazolidine ring. More preferably the curing agent comprises DICY, OTB, phenolic hardener, acid anhydrides such as 1,2,4,5-benzenetetracarboxylic anhydride (PMDA) or an imidazoline ring, preferably 2-phenyl-2-imidazoline.

DICY is the most widely used crosslinking agent for epoxy powder coating. It is a white solid crystalline compound. The amino hydrogens present in the structure of DICY can react with the oxirane rings of epoxy resins. Suitable DICY for curing epoxy resins is available commercially. Representative examples of suitable DICY include Casamid DMPF from Thomas Swan and CP-1 from Anqing F&F chemical.

OTB is a derivative of DICY, which provides good solubility in the epoxy resin. Commercially available OTB for curing epoxy resins include HT2844 from Huntsman, HT2855 from Anqing F&F Chemical and Casamid 710 from Thomas Swan.

Phenolic hardener is prepared by step-growth of polymerization of phenols with aldehydes with excess of phenols. It can also be prepared by condensation of epoxy resins with a molar excess of phenolic compounds. There are also other ways of preparing the phenolic ended materials used as crosslinker for epoxy resins. They normally have a hydroxy equivalent weight ranging between 230-260 g/eq. Commercially available phenolic hardeners suitable for curing epoxy resins include KD407 and KD410 from Kukdo.

Low molecular weight acid anhydrides such as phthalic anhydrides, maleic anhydride, trimellitic anhydride and pyromellitic dianhydride (PMDA) can be used for curing epoxy resins. PMDA can also react with 2-phenyl imidazoline to form a matting curing agent for powder. These materials are widely commercially available.

An imidazoline ring may also be used as a curing agent for epoxy resin. A preferred curing agent for the powder coating composition of the present invention comprises 2-phenyl-2-imidazoline (CAS number 936-49-2). 2-phenyl-2-imidazoline, suitable for use in the powder coating composition of the present invention, is available commercially, e.g. under the trade name HC31 from Huangshan Huahui Technology Co. Ltd, under the tradename Vestagon B31 from Evonik Degussa Coatings & Colour and under the tradename MB 31 from Huangshan Deping Chemical Co. Ltd.

It will be appreciated that the curing agent and the epoxy resin need to react in order to cure the coating. The suitable amount of curing agent and epoxy resin depends on the relative numbers of reactive groups, i.e. epoxide in epoxy resin and amine/reactive groups in curing agent.

Preferred curing agents for the intumescent coating composition and intumescent layer are DICY, OTB, 2-phenyl-2-imidazoline and phenolic hardener. More preferred curing agents are DICY, OTB and 2-phenyl-2-imidazoline. The most preferred curing agents are DICY and OTB.

Generally speaking, the amount of DICY or OTB curing agent present (in wt%) in the powder coating composition is preferably 1.5-10 wt%, more preferably 2.5-7 wt%, and still more preferably 3-5 wt%, based on the amount of epoxy resin present.

Generally speaking, the amount of phenolic hardener curing agent present (in wt%) in the powder coating composition is preferably 10-45 wt%, more preferably 15-40 wt%, and still more preferably 18-35 wt%, based on the amount of epoxy resin present.

Generally speaking, the amount of acid anhydride curing agent present (in wt%) in the powder coating composition is preferably 3.5-8.5 wt%, more preferably 4-8 wt%, and still more preferably 4.6-7.5 wt%, based on the amount of epoxy resin present.

Generally speaking, the amount of 2-phenyl-2-imidazoline curing agent present (in wt%) is preferably 3.0-8.0 wt%, more preferably 3.5-7.5 wt%, and still more preferably 4.0-7.0 wt%, based on the amount of epoxy resin present.

It is preferred if the curing agent and the epoxy resin are mixed in such a ratio that the curing agent is present in a stoichiometric amount that is 30-120 %, more preferably 50-115 % and still more preferably 60-110 %, based on the number of reactive groups in the curing agent relative to the number of reactive groups present in the epoxy resin.

### Polyester resin

The powder coating composition of the present invention may comprise a polyester resin. When present, the polyester resin is preferably a carboxylated polyester resin, also referred to as polyester having carboxy functional groups, and more preferably a saturated carboxylated polyester resin.

The acid value of the carboxylated polyester resin present in the powder coating composition of the present invention is preferably16-80 mgKOH/g and will depend on the curing agent used.

There are two types of carboxylated polyester resin that may be present in the powder coating composition of the present invention, one that can be cured with TGIC or HAA, and another that can be cured with epoxy resin. The latter results in a so-called hybrid resin in the binder system.

### Polyesters for crosslinking with TGIC/HAA

The carboxylated polyester resin present in the powder coating composition is preferably derived from neopentyl glycol (NPG) and terephthalic acid (TPA) and/or isophthalic acid (IPA). These resins are called outdoor resin. Normally outdoor resin is cured with triglycidyl isocyanurate (TGIC) or β-hydroxy alkyl amides (HAA) or its derivatives.

Typical such polyester resins present in the powder coating composition of the present invention include resins from Allnex, DSM, Shenjian, Khua and Fenglin.

Suitable polyester resins, e.g. when the weight ratio of polyester having an acid value of 16-26 mgKOH/g to TGIC is 96:4, include Uralac P3800 from DSM, Crycoat 2491-2, 2452-2 from Allex; SJ4G, SJ4580 and SJ4868 from ShenjianGH4405, GH4408 from Khua, FL-2031, FL2032 and FL2034 from Fenglin.

Suitable polyester resins, e.g. when the weight ratio of polyester having an acid value of 28-38 mgKOH/g to TGIC is 73:7, include GH2219, GH2205, GH2208 from Khua, FL-2011, FL-2013, FL-2017 from Fenglin. Uralac P2400, P5300 and P6300 from DSM; Crycoat 2441-2, 2430-0 and 2498-0 from Allnex, SJ4E, SJ4ET and SJ4868 from Shenjian.

Suitable polyester resins, e.g. when the weight ratio of polyester having an acid value of 46-58 mgKOH/g to TGIC is 90:10, include SJ4H, SJ4581 and SJ4803 from Shenjian, GH-4403, GH-4401 from Khua, FL-2033, FL-2037 and FL2047 from Fenglin; Uralac P2200, P2240 and P2244 from DSM. Crycoat 2431-0, 2490-2 from Allnex.

The amount of polyester resin present in the powder coating composition, e.g. when the curing agent is TGIC, is preferably 35-66 wt%, more preferably 43-62 wt%, and still more preferably 48-58 wt%, based on the total weight of the powder coating composition.

TGIC is the most important curing agent for carboxylated polyesters. It is the most popular crosslinker for polyester powder coating for outdoor use. TEPIC-G from Nissan, PT810 from Hustman, TGIC from Huangshan Huahui are commercially available forms of TGIG.

The amount of TGIC present in the powder coating composition of the present invention is preferably 1.5-13 wt%, more preferably 2-11wt%, and still more preferably 3-7.8 wt%, based on the weight of polyester resin.

Suitable polyester resins present in the powder coating composition of the present invention, e.g. when the weight ratio of polyester having an acid value of 16-26 mgKOH/g to HAA is 96.5:3.5, include GH3301 from Khua, FL3031, FL-3032 from Fenglin, Uralac P837, P821 and P836 from DSM, Crycoat 2691-2, 2670-3 from Allnex; SJ4B-2, SJ5800 and SJ5811 from Shenjian.

Suitable polyester resins present in the powder coating composition of the present invention, e.g. when the weight ratio of polyester having an acid value of 28-38 mgKOH/g to HAA is 95:5, include GH3320, GH-3322, GH-3325 from Khua, FL-3011, FL-3012A from Fenglin, Uralac P812, P855 and P865. Crycoat 4642-3, E 04351 and E04365 from Allex, SJ5587, SJ5701 from Shenjian.

Suitable polyester resins present in the powder coating composition of the present invention, e.g. when the weight ratio of polyester having an acid value of 46-58 mgKOH/g to HAA is 93:7, include GH4407 from Khua, FL3033 from Fenglin; Uralac P870 and P877 from DSM; Crycoat 2671-3 and 2655-6 from Allnex; SJ5801 and SJ5807-4 from Shengjian.

The amount of polyester resin present in the powder coating composition, e.g. when the curing agent is HAA, is preferably 37-66 wt%, more preferably 45-62 wt%, and still more preferably 50-58 wt%, based on the total weight of the powder coating composition.

HAA has been developed as an alternative for TGIC. HAA may refer to these three chemicals: N,N,N',N'-tetrakis(2-hydroxyethyl)adipamide (Primid XL552 from EMS T-105 from Nanhai Chemical), N,N,N',N'-tetrakis(2-hydroxpropyl)adipamide (Primide 1260 from EMS) or beta-hydroxy alkyl amide (Primid 4510 from EMS). Preferably N,N, N',N'-tetrakis(2-hydroxyethyl)adipamide is used in powder coating compositions of the present invention.

The amount of HAA present in the powder coating compositions of the present invention is preferably 1.0-9.0 wt%, more preferably 1.5-7.5 wt%, and still more preferably 2.5-5.3 wt%, based on the weight of polyester resin.

### Polyesters for curing with epoxy resin

BPA epoxy resins, cross-linked with carboxylic acid-terminated polyester resins, e.g. having a Mn of a few thousand, are called hybrid powder coatings. Their properties are intermediate between epoxy and polyester resins and produce coatings with intermediate properties. Most are derived from neopentyl glycol (NPG) and terephthalic acid (TPA) with smaller amounts of additional monomers to adjust the Tg to the desired level and to increase the degree of polymerization (fn) above two. The acid value of the carboxylated polyester resin can, for example, vary from 28-80 mgKOH/g, depending on the ratio of polyester to epoxy. The weight ratio between polyester and epoxy having an EEW value of 650-750 g/eq may be 50:50; 60:40; and 70:30.

Typical polyester resins (with an acid value of 66-80 mgKOH/g) for, e.g. 50:50 hybrid powder coating compositions are Uralac P5127, P4055 from DSM, Crycoat 1514-2, 1540-0 and 1573-0 from Allnex SJ3#-B, SJ3AT, SJ3301 from Shenjian, FL-1050, FL-1054, FL-1058 from Fenglin and GH-1150, GH-1156, GH1159 from Khua.

Typical polyester resins (with an acid value of 45-60 mgKOH/g) for, e.g. 60:40 hybrid powder coating compositions are Uralac P5065, P4260 and P6060 form DSM, Crycoat 1622-0, 1631-0 and 1696-0 from Allnex, SJ5A, SJ5BT-6 and SJ6711 from Shenjian; FL-1060, FL-1064, FL1067 from Fenglin, GH-1164, GH-1160, GH-1261 from Khua.

Typical polyester resins (with an acid value of 28-38 mgKOH/g) for, e.g. 70:30 hybrid powder coating compositions are Uralac P775, P5070 and P5170, Crycoat 1702-0, 1770-0 and 1781-0 from AllnexSJ6A, SJ6B and SJ7301 from Shenjian; GH-1171, GH-1172, GH-1176 from Khua, FL-1071, FL-1074 and FL-1176 from Fenglin.

The amount of polyester resin present in hybrid systems present in the powder coating composition is preferably 15-60 wt%, more preferably 20-55 wt%, and still more preferably 25-49 wt%, based on the total weight of the powder coating composition. The amount of epoxy resin present in hybrid systems present in the powder coating composition is preferably 4-40 wt%, more preferably 6-37 wt%, and still more preferably 8-33.5 wt%, based on the total weight of the powder coating composition.

### Intumescent component

The powder coating composition of the present invention comprises an intumescent component comprising an acid-generating agent. The acid-generating compound preferably comprises a source of phosphoric, sulfonic acid or boric acid. In other words, the acid-generating compound is preferably capable of producing phosphoric acid, sulfonic acid or boric acid upon exposure to heat, particularly at temperatures greater than 200° C.

Examples of acid-generating compounds include sodium phosphate, potassium phosphate (e.g. potassium tripolyphosphate), ammonium phosphate (e.g. ammonium polyphosphate (APP), monoammonium phosphate, diammonium phosphate), sodium sulfate, potassium sulfate, ammonium sulfate, magnesium sulfate, para-toluene sulfonic acid, borate salts (such as ammonium pentaborate, zinc borate, sodium borate, lithium borate, aluminum borate, magnesium borate), borosilicate compounds, or a combination of any thereof.

In some examples, the acid-generating compound comprises a phosphoric acid ester of a polyhydroxy compound, or an ammonium phosphate (e.g., APP), or an amine phosphate (e.g., melamine phosphate), or a combination of any thereof.

A particularly useful acid-generating compound is ammonium polyphosphate. APP compounds are polymeric phosphates, having P-O-P linkages, which may be represented by the formula:

[NH₄PO₃]ₙ

wherein the average value of n is at least about 10. Particularly useful APP compounds in the coating compositions of the present invention include those having values of n>1000. Suitable APP for use in the powder coating composition of the present invention is commercially available from Exolit, TMAP462 from Clariant, APP from Hefei Zhongke, Ji'nan Jinyintai and JLS-APP from JLS chemical.

The powder coating composition of the present invention preferably comprises 27 to 100 wt% of an acid-generating agent, more preferably 43-75 wt%, based on the total weight of the intumescent component of the powder coating composition.

The intumescent component of the powder coating composition of the present invention preferably comprises an expansion agent (also known as a blowing agent). The expansion agent produces non-flammable gases, generally nitrogen, when exposed to fire or heat. The produced gases will expand the coating to form a thicker protective layer.

Suitable examples of commercially available expansion agents include but are not limited to nitrogen-containing compounds such as glycine, melamine, melamine salts, melamine derivatives, urea, urea derivatives, dicyandiamide, guanidine, and isocyanurate derivatives, especially melamine. Melamine for use in the coating composition of the present invention is commercially available from Rongteng Chemical, Sichuan Jiniang Chemcial, Ji'nan Jinyintai Chemical, and Sichuan Meifeng Chemical.

Melamine derivatives include for example melamine formaldehyde, methylolated melamine, hexamethoxymethylmelamine, melamine monophosphate, di-melamine phosphate, melamine biphosphate, melamine polyphosphate, melamine pyrophosphate, melamine cyanurate, melamine borate, melam (N2-(4,6-diamino-1,3,5-triazin-2-yl)-1,3,5-triazine-2,4,6-triamine), melem (2,5,8-triamino-1,3,4,6,7,9,9b-heptaazaphenalene), and melon (poly[8-amino-1,3,4,6,7,9,9b-heptaazaphenalene-2,5-diyl)imino).

Urea derivatives include, for example, N-alkylureas such as methyl urea; N,N'-dialkylureas such as dimethylurea; and N,N,N'-trialkylureas such as trimethylurea; guanylurea; guanylurea phosphate; formamide amino urea; guanylurea phosphate; 1,3-diamino urea; biurea; and the like.

Isocyanurate derivatives of interest include tris-(2-hydroxyethyl)isocyanurate (THEIC).

Boron-containing compounds useful as expansion agents in the present invention include, but are not limited to, boric acid, and borates, such as ammonium pentaborate, zinc borate, sodium borate, lithium borate, aluminum borate, magnesium borate, and borosilicate.

The expansion agent may also comprise monomeric or polymeric compounds such as meso-lactide, polylactide, a polysulfone, a polycarbonate, a polyester, a 1,1-di-activated vinyl compound, or an addition polymer of a 1,1-di-activated vinyl compound, or a combination of any thereof.

A physical expansion agent such as expandable graphite and/or gas incorporating expandable microspheres may also be used.

The powder coating composition preferably comprises 0 to 64 wt% of an expansion agent, more preferably 11 to 43 wt%, based on the total weight of the intumescent component of the powder coating composition.

The intumescent component of the powder coating composition of the present invention preferably comprises a carbon donor compound. The carbon donor compound preferably comprises an organic polyhydroxy compound (i.e. an organic polyol) and/or expandable graphite. For example, the carbon donor compound may be pentaerythritol, dipentaerythritol, tripentaerythritol, a polysaccharide (e.g., starch, cellulose, glycogen, and the like), a disaccharide sugar (e.g., sucrose, lactose, maltose, and the like), a monosaccharide sugar (glucose, fructose, galactose, and the like), glycerol, or expandable graphite, or a combination of any thereof.

Preferably the carbon donor is pentaerythritol or dipentaerythritol, especially pentaerythritol. Suitable pentaerythritol is commercially available from Guizhou Kailin Chemical, Hengyang Sanhua chemical, Jiansu Sanmu material and Anhui Jinhe Chemical.

The powder coating composition preferably comprises 0 to 64 wt% of the carbon donor compound, more preferably 11 to 43 wt%, of the carbon donor compound based on the total weight of the intumescent component of the powder coating composition.

The powder coating composition of the present invention preferable comprises a total amount of intumescent components (i.e. acid-generating agent, expansion agent and/or carbon donor compound) of 25-63 wt%, more preferably 30-55 wt% and still more preferably 35-50 wt%, based on the total weight of the powder coating composition.

A particularly preferred coating composition of the present invention comprises an intumescent component comprising ammonium polyphosphate, and optionally melamine and/or pentaerythritol. Yet more preferably the coating composition of the present invention comprises an intumescent component comprising ammonium polyphosphate, melamine and pentaerythritol.

One preferred powder coating composition of the present invention comprises 27-100 wt%, more preferably 43-75 wt% ammonium polyphosphate, based on the total weight of the intumescent component of the powder coating composition.

Another preferred powder coating composition of the present invention comprises 0-64 wt%, more preferably 11-43 wt% melamine, based on the total weight of the intumescent component of the powder coating composition.

Another preferred powder coating composition of the present invention comprises 0-64 wt%, and more preferably 11-43 wt% pentaerythritol, based on the total weight of the intumescent component of the powder coating composition.

In a preferred powder coating composition of the present invention the weight ratio of APP : melamine : pentaerythritol is APP 27-100 wt% : melamine 0-64 wt%: pentaerythritol 0-64 wt%, based on the weight of the intumescent component. Still more preferably the weight ratio of APP : melamine : pentaerythritol is APP 43-75 wt% : melamine 11-43 wt% : pentaerythritol 11-43 wt%, based on the weight of the intumescent component.

### Charging agent

To achieve higher coating thickness in a single application, the powder coating composition of present invention comprises a charging agent comprising carbon fiber. By adding carbon fiber, the charge existing on the previously deposited powder coating particles can be removed very quickly, making it easier for the later coming powder to stick on the powder.

The carbon fiber present in the powder coating composition of the present invention preferably has a length of 0.1-2 mm, preferably 0.2-1.6 mm and still more preferably 0.2-1.2 mm. The carbon fiber present in the powder coating composition of the present invention preferably has a diameter of 1-20 µm, more preferably 3-15 µm and still more preferably 5-10 µm.

The carbon fiber present in the powder coating composition of the present invention preferably has an electric resistivity of 1.0 x 10⁻⁷ - 1.0 x 10⁻² Ω·cm, more preferably 1.0 x 10⁻⁶ - 1.0 x 10⁻² Ω·cm and still more preferably 1.0 x 10⁻⁵ - 1.0 x 10⁻² Ω·cm.

Suitable carbon fiber for use in the powder coating compositions of the present invention is for example available from Toray, BOS and Lishuo.

As mentioned above, it is important to remove the charge carried by already deposited particles on the substrate to avoid back ionization. Commonly used charging materials are hydroxy group containing materials such as polyethylene glycol (PEG) 6000-8000, glycerol monostearate, barium titanate etc. These materials are normally dispersed in the coating at a molecular level making the speed of charge removal very slow. Without being bound by theory, it is assumed that adding carbon fibers as hereinbefore described, removes charge existing on the previously applied powder coating particles very quickly, making it easier for the later arriving particles to stick onto the already applied powder. Optionally the powder coating composition of the present invention may comprise polyethylene glycol (PEG) 6000-8000, glycerol monostearate, and/or barium titanate. Preferably, however, the powder coating composition of the present invention does not comprise polyethylene glycol (PEG) 6000-8000, glycerol monostearate, barium titanate.

It is preferred that the amount of carbon fiber in the powder coating composition of the present invention is 2-15 wt%, more preferably 3-8 wt%, and still more preferably 3-7 wt%, of the total weight of the powder coating composition.

Carbon fiber present in the powder coating compositions may, besides providing the charge removal function, also function as reinforcing fiber when the powder coating starts to intumesce. It is preferred that no other reinforcing fiber, except carbon fiber, is used. Thus preferably the powder coating composition of the present invention does not comprise other inorganic fibers or organic fibers. Typical inorganic fibers include: carbide fibers, such as boron carbide fibers, silicon carbide fibers, niobium carbide fibers, etc.; nitride fibers, such as silicon nitride fibers; boron containing fibers, such as boron fibers, boride fibers; silicon containing fibers, such as silicon fibers, alumina-boron silica fibers, E-glass (non-base aluminum borates) fibers, C-glass (non-base or low base sodalime-aluminumborosilicate) fibers, A-glass (base -sodalime-silicate) fibers, S-glass fibers, inorganic glass fibers, quartz fibers, etc. The glass fibers may include E-glass fibers, C-glass fibers, A-glass fibers, S-glass fibers, etc.

### Colour pigments

The powder coating composition of the present invention works well without any pigment but for aesthetic reasons it preferably comprises at least one colour pigment. The colour pigment may be inorganic or organic colour pigments.

Representative examples of suitable inorganic colour pigments for inclusion in the powder coating composition of the present invention include titanium dioxide, ferro-manganese black, iron oxide red, black pigments, yellow pigments, chrome pigments, e.g. copper chrome, carbon black and combinations thereof.

Representative examples of suitable organic pigments for inclusion in the powder coating composition of the present invention include phthalocyanine, azo, dioxazines, perylene, anthraquinone, thioindigo, isodibenzanthrone, triphendioxane, quinacridone pigments, vat dye pigments and combinations thereof.

Preferred colour pigments for inclusion in the powder coating composition of the present invention are selected from titanium dioxide, ferro-manganese black, carbon black, organic red pigments, organic yellow pigments, organic blue pigments, ultramarine blue, and organic green pigments. More preferably ferro-manganese black is included in the powder coating composition of the present invention.

Suitable colour pigments are commercially available, e.g. NTR-606, Beablack 2669F, Beablack 2870F, Red 122, DPP Red SR2P, Yellow 139, Sudafast blue 2789, Blue 51, Green 2730K, ferro-manganese black.

Generally speaking, colour pigments should be included in the powder coating composition in the minimum amount necessary to give the desired colour. The amount of colour pigment required, in part, depends on the type of colour pigment. The skilled person will be able to determine suitable amounts for different types of pigments.

When present, the amount of colour pigment present in the powder coating compositions of the present invention is preferably 0-15 wt%, more preferably 0-10 wt%, and still more preferably 0-5 wt%, based on the total weight of the intumescent powder coating composition.

### Preferred powder coating compositions

One preferred powder coating composition of the present invention comprises:
(a) a binder system comprising a binder and a curing agent selected from the group consisting of an epoxy resin and a curing agent for the epoxy resin, a polyester resin cured with an epoxy resin, or a polyester resin cured with triglycidyl isocyanurate (TGIC) or β-hydroxy alkyl amide (HAA);
(b) an intumescent component comprising ammonium polyphosphate and preferably melamine and/or pentaerythritol; and
(c) a charging agent comprising carbon fiber.

Another preferred powder coating composition of the present invention comprises:
(a) 35-67 wt% of a binder system comprising a binder and a curing agent selected from the group consisting of an epoxy resin and a curing agent for the epoxy resin, a polyester resin cured with an epoxy resin, or a polyester resin cured with triglycidyl isocyanurate (TGIC) or β-hydroxy alkyl amide (HAA)
(b) 25-63 wt% of an intumescent component comprising ammonium polyphosphate and preferably melamine and/or pentaerythritol; and
(c) 2-15 wt% of carbon fiber,
wherein all wt% are based on the total weight of the coating composition.

In a preferred powder coating composition of the present invention the amount of carbon fiber present is 2-15 wt%, preferably 3-8 wt%, more preferably 3-7 wt%, based on the total weight of the powder coating composition.

Another preferred powder coating composition of the present invention comprises:
(a) a binder system comprising an epoxy resin and a curing agent for the epoxy resin;
(b) an intumescent component comprising ammonium polyphosphate and preferably melamine and/or pentaerythritol; and
(c) a charging agent comprising carbon fiber.

In a preferred powder coating composition of the present invention comprising an epoxy resin, the epoxy resin is selected from bisphenol A based epoxy resins, bisphenol F based epoxy resins, novolac-modified bisphenol A epoxy based resin, and mixtures thereof.

In a preferred powder coating composition of the present invention comprising an epoxy resin, the equivalent epoxy weight (EEW) of the epoxy resin is 190-1950 g/eq, preferably 190 - 1300 g/eq, more preferably 380 - 1300 g/eq, and still more preferably from 380 to 1000 g/eq.

In a preferred powder coating composition of the present invention comprising an epoxy resin, the curing agent is selected from DICY, OTB, 2-phenyl-2-imidazoline, phenolic hardener or acid anhydride. In a more preferred powder coating composition of the present invention comprising an epoxy resin, the curing agent is selected from DICY, OTB or 2-phenyl-2-imidazoline, preferably DICY or OTB.

Another preferred powder coating composition of the present invention comprises:
(a) 35-67 wt% of a binder system comprising an epoxy resin selected from bisphenol A based epoxy reins, bisphenol F based epoxy resins, novoloac-modified bisphenol A based epoxy resin, and mixtures thereof; and a curing agent selected from DICY, OTB, 2-phenyl-2-imidazoline, phenolic hardener or acid anhydrides;
(b) 25-63 wt% of an intumescent component comprising ammonium polyphosphate and preferably melamine and/or pentaerythritol; and
(c) 2-15 wt% of carbon fiber,
wherein all wt% are based on the total weight of the coating composition.

Another preferred powder coating composition of the present invention comprises:
(a) a binder system comprising a polyester resin and a curing agent which is an epoxy resin, wherein the weight ratio of polyester resin to epoxy resin is 50:50, 60:40 or 70:30;
(b) an intumescent component comprising ammonium polyphosphate and preferably melamine and/or pentaerythritol; and
(c) a charging agent comprising carbon fiber.

Another preferred powder coating composition of the present invention comprises:
(a) 35-67 wt% of a binder system comprising a polyester resin and a curing agent which is an epoxy binder resin, wherein the weight ratio of polyester resin to epoxy resin is 50:50, 60:40 or 70:30;
(b) 25-63 wt% of an intumescent component comprising ammonium polyphosphate and preferably melamine and/or pentaerythritol; and
(c) 2-15 wt% of a charging agent comprising carbon fiber
wherein all wt% are based on the total weight of the coating composition.

Another preferred powder coating composition of the present invention comprises:
(a) a binder system comprising a polyester resin and a curing agent which is TGIC, wherein the weight ratio of polyester resin to TGIC is 90:10 to 96.5:3.5;
(b) an intumescent component comprising ammonium polyphosphate and preferably melamine and/or pentaerythritol; and
(c) a charging agent comprising carbon fiber.

Another preferred powder coating composition of the present invention comprises:
(a) 35-67 wt% of a binder system comprising a polyester resin and a curing agent which is TGIC, wherein the weight ratio of polyester resin to TGIC is 90:10 to 96.5:3.5;
(b) 25-63 wt% of an intumescent component comprising ammonium polyphosphate and preferably melamine and/or pentaerythritol; and
(c) 2-15 wt% of a charging agent comprising carbon fiber
wherein all wt% are based on the total weight of the coating composition.

Another preferred powder coating composition of the present invention comprises:
(a) a binder system comprising a polyester resin and a curing agent which is HAA, wherein the weight ratio of polyester resin to HAA is 92.5:7.5 to 97.5:2.5;
(b) an intumescent component comprising ammonium polyphosphate and preferably melamine and/or pentaerythritol; and
(c) a charging agent comprising carbon fibers.

Another preferred powder coating composition of the present invention comprises:
(a) 35-67 wt% of a binder system comprising a polyester resin and a curing agent which is HAA, wherein the weight ratio of polyester resin to HAA is 92.5:7.5 to 97.5:2.5;
(b) 25-63 wt% of an intumescent component comprising ammonium polyphosphate and preferably melamine and/or pentaerythritol; and
(c) 2-15 wt% of a charging agent comprising carbon fibers,
wherein all wt% are based on the total weight of the coating composition.

The powder coating compositions of the invention may also include additional ingredients such as color pigments as considered desirable by the skilled person for the specific coating.

### Method for preparing a powder coating composition

The present invention also relates to a method for preparing a powder coating composition, and preferably an intumescent powder coating composition, as hereinbefore described comprising:
(i) blending a binder system comprising a binder and a curing agent, an intumescent component comprising an acid-generating agent, preferably ammonium polyphosphate, and optionally an expansion agent and/or a carbon donor compound, and a charging agent comprising carbon fiber, to form a mixture; and
(ii) extruding said mixture to form particles.

The extruded particles may take any form, e.g. spherical particles, chips or flakes. Preferred processes of the invention further comprise milling the extruded particles to form powder. Milling may be carried out in any conventional mill to a particle size found most suitable for powder application. Other preferred processes of the invention further comprise sieving the milled particles.

Thus, a preferred process of the invention comprises:
(i) blending a binder system comprising a binder and a curing agent; an intumescent component comprising an acid-generating agent, preferably ammonium polyphosphate, and optionally an expansion agent and/or a carbon donor compound, and a charging agent comprising carbon fiber, to form a mixture;
(ii) extruding said mixture to form particles;
(iii) milling said extruded particles to form milled particles; and
(iv) sieving said milled particles.

After milling, sieving is preferably carried out to remove coarse particles.

Optionally a fluidizing agent (e.g. fume silica or aluminum oxide) is added during milling and/or sieving.

Any conventional mixing, extrusion and milling method may be used. The preferred extrusion conditions are conventional and will generally be kept at low temperature, e.g. below 140 °C, to avoid premature curing. The particle size distribution D₅₀ of the powder coating composition is preferably in the range of 10 to 120 µm, and still more preferably 15 to 100 µm. The preferred particle size D₅₀ is at least 30 or 80 µm, and advantageously does not exceed 80 µm, e.g. 40 to 70 µm. In general, particle sizes can be established using a Malvern particle size analyser.

### Method for coating a substrate

The invention also provides a method for coating a substrate, preferably a metal substrate, with a powder coating composition, preferably an intumescent powder coating composition, as hereinbefore described, comprising:
(i) applying a powder coating composition as hereinbefore described to said substrate, wherein said substrate is preferably pre-coated with a primer layer; and
(ii) curing said powder coating composition to form a layer, preferably an intumescent layer.

The powder coating composition of the invention may be applied to substrate, optionally pre-coated with a primer, by any conventional powder coating method, e.g. electrostatic spraying. A cold substrate may, for example be coated in a spray booth. To achieve high coating build of, e.g. up to 850 µm, a positively charged gun, e.g. a tribo gun, which gives powder coating a positive charge by the friction between the powder and the wall of the gun or a newly developed positively charged gun from the Swiss company Gema, GM04, can be used in combination with a corona gun. The tribo gun or other positively charged gun is preferably used before the corona gun spray. The powder coating layer, preferably intumescent layer, may optionally be applied using a positively charged gun to achieve a powder thickness of 0-200 µm, followed by application by a corona gun to reach a total coating thickness of, e.g. up to 850 µm. After application, the powder coating composition is cured, e.g. in a convection oven or an infrared oven or a combination of both ovens.

Once a substrate is coated with the powder coating composition of the invention, the coating is cured. Curing may be carried out by heating, e.g. in one of the above-mentioned ovens, which enables the particles to melt, fuse and cure. Optionally, the powder coating composition of the invention may be cured by placing the substrate in a post cure oven.

Preferably the dry thickness of the powder coating layer, preferably intumescent layer, is 150 to 850 µm such as 200 to 850 µm especially 250 to 850 µm.

Thus the present invention also relates to a coating, preferably a cured coating, comprising a powder coating composition, and preferably an intumescent powder coating composition, hereinbefore described.

Additionally, the present invention also relates to a substrate, preferably a metal substrate, coated with a powder coating composition, and preferably an intumescent powder coating composition, or a coating, as hereinbefore described.

### Coating system

The present invention also relates to a coating system comprising an intumescent layer comprising, or formed from, a powder coating composition as hereinbefore described. Preferably the coating system comprises, preferably consists, of three layers, wherein said coating system comprises:
(i) a primer layer, formed on a substrate, preferably a metal substrate;
(ii) an intumescent layer, formed on said primer layer, comprising a powder coating composition as hereinbefore described; and
(iii) a topcoat layer, formed on said intumescent layer.

As mentioned above, the inside and exterior of a battery pack will be exposed to both high temperatures and temperature changes as well as high humidity during use. It is therefore important to protect the metal present in the battery pack, e.g. in the battery assembly, from corrosion during its service life. This is preferably achieved using a coating system comprising a primer layer and a topcoat layer in addition to an intumescent layer.

The primer layer is applied on the substrate, typically the metal, before (i.e. under) the intumescent layer, and protects the substrate against corrosion and gives good adhesion thereto as well as to the overlying intumescent layer. These properties are primarily obtained by the binder system comprising a pure epoxy resin cured with an epoxy curing agent, or epoxy resin cured with carboxylic acid polyester. The topcoat is applied on the intumescent layer and seals and protects the intumescent layer, including its water sensitive components. With the protection of a topcoat, the fire resistance performance of the coating system may be maintained for long periods of time.

In fact, by combining the intumescent layer with a primer layer and a topcoat layer in a coating system, the fire resistance performance of the resulting coating system will not change even when the system is exposed to water, high temperatures or temperature cycles, i.e. the shifting conditions that may occur in a battery pack. Thus, by providing a coating system comprising a primer layer, an intumescent layer, and a topcoat layer, a three-layer powder coating system is provided which is corrosion resistant, water resistant and fire resistant, which will not loosen, swell significantly or blister upon exposure to water, even at high temperatures.

Thus the present invention provides a coating system, and preferably a powder coating system, comprising a primer layer, an intumescent layer and a topcoat layer, which provides all the properties required for a fire and heat resistant system for application in/on battery packs and similar electrical energy storing devices or systems.

The primer powder coating composition is preferably applied to the substrate in a thickness of 30-300 µm, preferably 50-250 µm, and most preferably 60-200 µm. Thus preferably the primer layer has a dry thickness of 30-300 µm, preferably 50-250 µm, and most preferably 60-200 µm.

The intumescent powder coating composition is preferably applied on top of the cured primer layer in a thickness of 150-850 µm, preferably 200-850 µm, and most preferably 250-850 µm. Preferably the intumescent layer has a dry thickness of 150-850 µm, preferably 200-850 µm, and most preferably 250-850 µm. It is unique that a coating thickness of up to 850 µm can be achieved for the intumescent coating composition of the present invention using a single spray and cure process. Compared with traditional powder coating compositions and application methods, the intumescent powder coating composition of the present invention has extraordinary properties, which contributes to energy savings and increased productivity.

The topcoat powder coating composition is preferably applied on top of the cured intumescent layer in a thickness of 60-300 µm, preferably 90-300 µm, and most preferably 120-300 µm. Thus preferably the topcoat layer has a dry thickness of 60-300 µm, preferably 90-300 µm, and most preferably 120-300 µm.

The total dry thickness of the, e.g. three-layer (primer, intumescent and topcoat) coating system is preferably 240 µm to 1450 µm, preferably 340-1400 µm, and more preferably 430-1350 µm.

### Primer coating composition and primer layer

The primer layer provides good adhesion of the coating to the substrate, preferably a metal substrate, and is also a corrosion barrier, protecting the substrate against corrosion.

The coating composition used to prepare the primer layer is referred to herein as the primer coating composition. It is preferably a powder coating composition. Preferably the primer coating composition and primer layer comprises a binder system comprising a binder selected from epoxy resin, polyester resin, or combinations thereof and curing agent. Preferably the primer coating composition and primer layer comprises a filler.

Thus a preferred primer coating composition and in a preferred coating system of the present invention, the primer coating composition and layer comprises:
(i) a binder system comprising a binder selected from epoxy resin, polyester resin, or combinations thereof and curing agent; and
(ii) optionally a filler, preferably feldspar or barium sulphate.

The amount of binder system, i.e. binder resin and curing agent combined, present in the primer coating composition is preferably 40-90 wt%, more preferably 45-80 wt%, and still more preferably 50-70 wt%, based on the total weight of the primer coating composition.

The primer coating composition is preferably prepared by an analogous method to that described above for the powder coating composition of the present invention.

### Epoxy resin

The primer coating composition and primer layer preferably comprises an epoxy resin. The epoxy resin is preferably a solid epoxy resin. Epoxy resins present in the primer coating composition and primer layer can be the same or different to epoxy resins used in the intumescent powder coating composition and the topcoat composition.

Preferred epoxy resins present in the primer coating compositions and primer layer have an epoxy equivalent weight (EEW) of 190-1950 g/eq, more preferably 380 to 1000 g/eq, still more preferably 380 - 900 g/eq.

There are two main categories of epoxy resins, glycidyl epoxy resins and non-glycidyl epoxy resins. Some classes of glycidyl epoxy resins include glycidyl-ether epoxy resins, glycidyl-ester epoxy resins and glycidyl-amine epoxy resins. Some classes of non-glycidyl epoxy resins include aliphatic epoxy resin and cycloaliphatic epoxy resin.

Preferably the solid epoxy resin present in the primer coating composition and primer layer comprises a glycidyl epoxy resin and more preferably a glycidyl-ether epoxy resin. Glycidyl-ether epoxy resins are generally prepared via a condensation reaction of a dihydroxy compound and epichlorohydrin. Preferably the dihydroxy compound is a bisphenol compound.

Representative examples of solid epoxy resins suitable for use in the primer coating composition and primer layer of the invention include bisphenol A based epoxy resins, bisphenol F based epoxy resins, novolac-modified bisphenol A based epoxy resin, isocyanate modified bisphenol A epoxy resin, cresol novolac type epoxy resin, O-cresol epoxy resin, silane modified bisphenol A epoxy resin, rubber modified bisphenol A epoxy resin, silicone modified bisphenol A epoxy resin, halogenated bisphenol A epoxy resin, and mixtures thereof. In a preferred primer coating composition and primer layer, the solid epoxy resins are selected from bisphenol A based epoxy resins, bisphenol F based epoxy resins, novolac-modified bisphenol A based epoxy resin, isocyanate modified bisphenol A epoxy resin, cresol novolac type epoxy resin, O-cresol epoxy resin, brominated bisphenol A epoxy resin and mixtures thereof. In a particularly preferred primer coating composition and primer layer, the solid epoxy resins are selected from bisphenol A based epoxy resins, novolac-modified bisphenol A based epoxy resin, bisphenol F epoxy resin, isocyanate modified bisphenol A epoxy resin, brominated bisphenol A epoxy resin and mixtures thereof. Bisphenol A based epoxy resin, novolac-modified bisphenol A based epoxy resin, brominated bisphenol A epoxy resin and mixtures thereof are particularly preferred.

Preferred solid epoxy resins, e.g. bisphenol A based epoxy resins, novolac-modified bisphenol A based epoxy resins, present in the primer coating composition and primer layer of the present invention have an equivalent epoxy weight (EEW) of 190-1950 g/eq, more preferably 380 to 1000 g/eq, and still more preferably 380-900g/eq. It is believed that the EEW plays an important role in the performance of the coating. Epoxy resin having a relatively lower EEW tends to have a lower viscosity and better wetting properties, and thereby better adhesion, but too low EEW gives rise to sagging and/or bubbles in the final coating. On the other hand, epoxy resin with a relatively high EEW tends to slow down degassing of the air in the coating as it cures. Moreover, if the EEW of the epoxy resin is too low or too high, the composition is challenging to process during coating and the final coating produced from the composition tends to have a poor appearance.

Suitable epoxy resins are available commercially. Representative examples of suitable epoxy resins include KD-213, KD-214C, KD-242K, KD-2200, KD-242G, KD-243G, KD-2103, KD-214M, KD-2203, KD-2104, KD214L, KD-9002, KD-9003, KD-9004, KD-213C, KD-213H, YDB-400, D.E.R 6805, NPCN-704, D.E.R. 6224, D.E.R. 6225, D.E.R. 662E, KD-211G, D.E.R. 662UH, D.E.R. 6635, D.E.R. 663U, D.E.R. 663UE, D.E.R. 664, D.E.R. 664U, D.E.R. 664UE, D.E.R. 672U D.E.R. 6510HT, YDCN-500-90P, BE501H, BE502L, BE502, BE503L, BE503, BE504, BE504H, BE505H, BE507, BEB-400YD-017, BE574P, BFE107, MOE-380, MOE-400, CNE202, CNE220, CNE220H, BE502S, BE503S, NPES-901, NPES-901H, NPES-902, NPES-902H, NPES-903K, NPES-903, NPES-903H, NPES-904, NPES-303, NPES-904H, NPES-304, NPEB-400, NPES-907, NPCN-704 and NPER-450.

The primer coating composition preferably comprises 30-67 wt%, more preferably 43-62 wt% and still more preferably 46-58 wt% of epoxy resin, based on the total weight of the primer coating composition.

### Epoxy curing agent

The primer coating composition and primer layer also comprises a curing agent. The curing agent reacts with the epoxy resin during curing to form a coating, e.g. a film coating. The curing agent therefore facilitates the provision of a coating composition with an acceptable cure time.

The curing agent present in the primer coating composition and primer layer preferably comprises dicyandiamide (DICY) or its derivatives, OTB, phenolic hardener, acid anhydrides, an imidazole or imidazoline ring. More preferably the curing agent present in the primer coating composition and primer layer comprises DICY, OTB, phenolic hardener, acid anhydrides or an imidazoline ring.

DICY is the most widely used crosslinking agent for epoxy powder coatings. It is a white solid crystalline compound. The amino hydrogens present in the structure of DICY can react with the oxirane rings of epoxy resins. Suitable DICY for curing epoxy resins are available commercially. Representative examples of suitable DICY include Casamid DMPF from Thomas Swan, and CP-1 from Anqing F&F chemical.

OTB is a derivative of DICY which provides good solubility in the epoxy resin. Commercially available OTB include HT2844 from Huntsman, HT2855 from Anqing F&F chemical and Casamid 710 from Thomas Swan.

Phenolic hardener is prepared by step-growth of polymerization of phenols with aldehydes with excess of phenols. It can also be prepared by condensation of epoxy resins with a molar excess of phenolic compounds. There are also other ways of preparing the phenolic ended materials used as crosslinker for epoxy resins. They normally have a hydroxy equivalent weight ranging between 230-260 g/eq. Commercially available phenolic hardeners include KD407 and KD410 from Kukdo.

Low molecular weight acid anhydrides such as phthalic anhydride, maleic anhydride, trimellitic anhydride and pyromellitic dianhydride (PMDA) can be used for curing epoxy resins. PMDA can also react with 2-phenyl imidazoline to form a matting curing agent for powder. These materials are widely commercially available.

An imidazoline ring may be used as a curing agent for epoxy resin. A preferred curing agent for the primer coating composition and primer layer comprises 2-phenyl-2-imidazoline (CAS number 936-49-2). 2-phenyl-2-imidazoline for use in the primer coating composition and primer layer is available commercially, e.g. under the trade name HC31 from Huangshan Huahui Technology Co. Ltd, under the tradename Vestagon B31 from Evonik Degussa Coatings & Colour and under the tradename MB 31 from Huangshan Deping Chemical Co. Ltd.

It will be appreciated that the curing agent and the epoxy resin need to react in order to cure the coating. The suitable amount of curing agent and epoxy resin depends on the relative numbers of reactive groups, i.e. epoxide in epoxy resin and reactive groups in curing agent. It is preferred if these components are mixed in such a ratio that the curing agent is present in a stoichiometric amount that is 80-120 %, more preferably 90-115 % and still more preferably 100-110 %, based on the number of reactive groups in the curing agent relative to the number of reactive groups present in the epoxy resin.

Preferred curing agents for the primer coating composition and primer layer are DICY, OTB, 2-phenyl-2-imidazoline and phenolic hardener. More preferred curing agents are DICY, OTB and 2-phenyl-2-imidazoline. The most preferred curing agents are DICY and OTB.

Generally, the amount of DICY or OTB curing agent present (in wt%) in the primer coating composition is preferably 1.5-10 wt%, more preferably 2.5-7 wt%, and still more preferably 3-5 wt%, based on the weight of epoxy resin present.

Generally, the amount of phenolic hardener curing agent present (in wt%) in the primer coating composition is preferably 10-45 wt%, more preferably 15-40 wt%, and still more preferably 18-35 wt%, based on the weight of epoxy resin present.

Generally, the amount of acid anhydride curing agent present (in wt%) in the primer coating composition is preferably 3.5-8.5 wt%, more preferably 4-8 wt%, and still more preferably 4.6-7.5 wt%, based on the weight of epoxy resin present.

Generally, the amount of 2-phenyl-2-imidazoline curing agent present (in wt%) in the primer coating composition is preferably 3.0-8.0 wt%, more preferably 3.5-7.5 wt%, and still more preferably 4.0-7.0 wt%, based on the weight of epoxy resin present.

### Polyester resin

The primer coating composition and primer layer may comprise a polyester resin. When present, the polyester resin is preferably a carboxylated polyester resin and more preferably a saturated carboxylated polyester resin.

Carboxylated polyester resin present in the primer coating composition and primer layer are preferably cured with epoxy resin.

BPA epoxy resins, cross-linked with carboxylic acid-terminated polyester resins, e.g. having a Mn of a few thousand, are called hybrid powder coatings. Their properties are intermediate between epoxy and polyester resins and produce coatings with intermediate properties. Most are derived from neopentyl glycol (NPG) and terephthalic acid (TPA) with smaller amounts of additional monomers to adjust the Tg to the desired level and to increase the degree of polymerization (fn) above two. The acid value of the carboxylated polyester resin can vary from 28-80 mgKOH/g, depending on the weight ratio of polyester to epoxy. The weight ratio between polyester and epoxy having an EEW value of 650-750 g/eq may be 50:50; 60:40; and 70:30.

Typical polyester resins (with an acid value of 66-80 mgKOH/g) for, e.g. 50:50 hybrid powder coating compositions are Uralac P5127, P4055 from DSM, Crycoat 1514-2, 1540-0 and 1573-0 from Allnex SJ3#-B, SJ3AT, SJ3301 from Shenjian, FL-1050, FL-1054, FL-1058 from Fenglin and GH-1150, GH-1156, GH1159 from Khua.

Typical polyester resins (with an acid value of 45-60 mgKOH/g) for, e.g. 60:40 hybrid powder coating compositions are Uralac P5065, P4260 and P6060 form DSM, Crycoat 1622-0, 1631-0 and 1696-0 from Allnex, SJ5A, SJ5BT-6 and SJ6711 from Shenjian; FL-1060, FL-1064, FL1067 from Fenglin, GH-1164, GH-1160, GH-1261 from Khua.

Typical polyester resins (with an acid value of 28-38 mgKOH/g) for, e.g. 70:30 hybrid powder coating compositions are Uralac P775, P5070 and P5170, Crycoat 1702-0, 1770-0 and 1781-0 from AllnexSJ6A, SJ6B and SJ7301 from Shenjian; GH-1171, GH-1172, GH-1176 from Khua, FL-1071, FL-1074 and FL-1176 from Fenglin.

The primer coating composition and primer layer of the coating system preferably comprises 15-60 wt%, more preferably 20-55 wt% and still more preferably 25-49 wt% of polyester resin, based on the total weight of the primer coating composition. The primer coating composition and primer layer preferably comprises 5-45 wt%, more preferably 10-40 wt% and still more preferably 15-35 wt% of epoxy resin, based on the total weight of the primer coating composition.

### Filler

The primer coating composition and primer layer preferably comprises filler.

Preferred fillers present in the primer coating composition and primer layer are inorganic fillers. Suitable inorganic filler particles exist in different forms, e.g. spherical, lamellar, nodular and irregular.

The fillers present in the primer coating composition and primer layer preferably have a D₅₀ of 0.5 to 25 µm, more preferably 1-20 µm, still more preferably 1-15 µm and yet more preferably 1-10 µm.

In a preferred primer coating composition and primer layer the filler is selected from barium sulphate, calcium carbonate, mica, wollastonite (calcium metasilicate), nepheline, dolomite, diatomite, alumina, aluminium hydroxide, kaolin, feldspar and mixtures thereof and more preferably barium sulphate, preferably precipitated barium sulphate, kaolin, feldspar and mixtures thereof. In a particularly preferred primer coating composition and primer layer the filler is selected from feldspar, barium sulphate, calcium carbonate, and mixtures thereof.

The primer coating composition and primer layer may comprise a single filler or a combination of two or more fillers. In some preferred primer coating compositions and primer layers, a single filler is present. When a single filler is present, the filler is preferably selected from barium sulphate, wollastonite (calcium metasilicate), nepheline, dolomite, diatomite, alumina, aluminium hydroxide, feldspar and mixtures thereof.

Suitable fillers are available commercially. Representative examples of suitable fillers include Blanc Fine GM-80 from Gemme Speciality Chemicals Co. Ltd, Blanc Fixe L from Yillong Chemical Group Limited, GL-2500 from Jiangsu Qunxin powder technology Co. Ltd, Specswhite and Micro Mica W1 from Imerys Minerals Ltd, JLH-60D and H6 from Shenzhen Jinhaohui Industrial Development Co. Ltd, GA-1 from Chuzhou Gera Minerals Co. Ltd., and feldspar, JYJC-12 from Henan Nonferrous Jinyuan Industrial Co., Ltd

The total amount of filler present in the primer coating composition and primer layer is preferably 0-55 wt%, more preferably 25-50 wt%, and still more preferably 30-40 wt% based on the total weight of the primer coating composition.

### Degassing agent

The primer coating composition and primer layer preferably comprises a degassing agent.
Conventional, commercially available, degassing agents may be used.

Representative examples of suitable degassing agent include cyclohexane dimethanol bisbenzoate, benzoin, benzoin derivatives and mixtures thereof. Preferably the degassing agent is benzoin or a benzoin derivative, and particularly preferably benzoin.

Suitable degassing agents are available from a wide range of commercial suppliers, e.g. benzoin is available under the tradename Miwon benzoin from Miwon Speciality Chemical Co. Ltd, and as benzoin from Orgamine Chemicals PVT Ltd, and Ningbo South Sea Chemical Co. Ltd.

A preferred primer coating composition and primer layer comprises 0.15-0.45 wt%, more preferably 0.17-0.4 wt% and still more preferably 0.2-0.35 wt% degassing agent, based on the total weight of the primer coating composition.

### Flow additive

The primer coating composition and primer layer preferably comprises a flow additive. The presence of a flow additive tends to increase surface smoothness, e.g. by reducing or eliminating surface imperfections such as craters, fish-eyes and pin holes. This is achieved by improving the melt-flow characteristics of the primer coating composition.

Conventional, commercially available, flow additives may be used, e.g. PCL-100 from Kscnt Co. Ltd, Rheoflow PLP 100H(A) from KS Chemical Co. Ltd and Resiflow PV 88 from Worlee-Chemie GmbH.

Representative examples of suitable flow additives include acrylics, silicon containing compounds, and fluorine-based polymers. A preferred primer coating composition and primer layer comprises a flow additive, which is an acrylic.

A preferred primer coating composition and primer layer comprises 0.01-5 wt%, more preferably 0.1-3 wt% and still more preferably 0.5-1.5 wt% flow additive, based on the total weight of the primer coating composition.

### Colour pigments

The primer coating composition and primer layer preferably comprises at least one colour pigment. The colour pigment may be inorganic or organic colour pigments.

Representative examples of suitable inorganic colour pigments for inclusion in the primer coating composition and primer layer include titanium dioxide, iron oxide red, black pigments, yellow pigments, chrome pigments, ferro-manganese black, carbon black and combinations thereof.

Representative examples of suitable organic pigments for inclusion in the primer coating composition and primer layer include phthalocyanine, azo, dioxazines, perylene, anthraquinone, thioindigo, isodibenzanthrone, triphendioxane, quinacridone pigments, vat dye pigments and combinations thereof.

Preferred colour pigments for inclusion in the primer coating composition and primer layer are selected from titanium dioxide, carbon black, organic red pigments, organic yellow pigments, organic blue pigments, ultramarine blue, and organic green pigments.

Another preferred primer coating composition and primer layer of the present invention comprise less than 5 wt%, more preferably less than 2 wt%, and still more preferably less than 0.8 wt% carbon black.

Suitable colour pigments are commercially available, e.g. NTR-606, Beablack 2669F, Beablack 2870F, Red 122, DPP Red SR2P, Yellow 139, Sudafast blue 2789, Blue 51, Green 2730K, ferro-manganese black.

Generally speaking, colour pigments should be included in the primer coating composition and primer layer in the minimum amount necessary to give the desired colour. The amount of colour pigment required, in part, depends on the type of colour pigment. The skilled person will be able to determine suitable amounts for different types of pigments.

When present, the amount of colour pigment present in the primer coating composition and primer layer is preferably 0.05-30 wt%, more preferably 0.1-25 wt%, and still more preferably 0.3-20 wt%, based on the total weight of the primer coating composition.

### Levelling agent

The primer coating composition and primer layer preferably comprises a levelling agent. Examples of suitable levelling agents include copolymers of methylacrylate and butylacrylate. Suitable levelling agents are commercially available, e.g. BLC701B from Ningbo South Sea Chemical Co. Ltd. and WK701 from Ningbo Wecan Chemical Co., Ltd. The levelling agents enhance the compositions melt-flow characteristics and help eliminate surface defects during curing.

When present, the amount of levelling agent present in the primer coating composition and primer layer is preferably 0.01-5 wt%, more preferably 0.1-3 wt% and still more preferably 0.5-1.5 wt%, based on the total weight of the primer coating composition.

### Additives

The primer coating composition and primer layer optionally comprises one or more additives. Examples of additives that are optionally present include amino alcohols, adhesion promoters, gloss modifiers, drying agents, waxes, ethylene bis stearamide (EBS), antioxidants, rheology additives, matting agent and surface modifying agents. Preferred additives that are present in the primer coating composition and primer layer are gloss modifiers, rheology modifiers, surface modifying agents, matting agent and mixtures thereof.

Representative examples of suitable rheology modifiers are hydrogenated castor oil and low melting polyethylene waxes.

Additional additives are preferably present in an amount of 0-10 wt%, more preferably 0.1-5 wt%, still more preferably 0.2-4 wt% and particularly preferably 0.5-3 wt%, based on the total weight of the primer coating composition.

### Preferred primer coating compositions and primer layers

A preferred primer coating composition and primer layer present in the coating system of the present invention comprises:
(i) a binder system comprising a binder and a curing agent selected from the group consisting of an epoxy binder resin and a curing agent for the epoxy resin, or a polyester binder resin cured with an epoxy binder resin;
(ii) optionally a filler, preferably feldspar or barium sulphate.

Another preferred primer coating composition and primer layer present in the coating system of the present invention comprises:
(i) 40-90 wt% of a binder system comprising a binder resin and a curing agent selected from the group consisting of an epoxy binder resin and a curing agent for the epoxy resin, or a polyester binder resin cured with an epoxy binder resin;
(ii) 0-55 wt% of a filler, preferably feldspar or barium sulphate and
(iii) 0-30wt% of a pigment;
wherein the wt% is based on the total weight of the primer coating composition.

Another preferred primer coating composition and primer layer present in the coating system of the present invention comprises:
(i) 50-80 wt% of an epoxy binder, wherein the curing agent and the epoxy resin, are mixed in such a ratio that the curing agent is present in a stoichiometric amount that is 50-120 %, more preferably 50-100 % and still more preferably 60-90 %, based on the number of reactive groups in the curing agent relative to the number of reactive groups present in the epoxy resin; and
(ii) optionally a filler,
wherein the wt% is based on the total weight of the primer coating composition.

Another preferred primer coating composition and primer layer present in the coating system of the present invention comprises:
(i) 50-80 wt% of an epoxy resin having an EEW of 190-1950 g/eq selected from the group of bisphenol A epoxy type 2-7, bisphenol A epoxy type 3, bisphenol F, brominated bisphenol A epoxy, o-cresol and novolac modified epoxy and a curing agent selected from DICY, OTB, 2-phenyl-2-imidazoline and phenolic hardener, preferably DICY and OTB, wherein the curing agent and the epoxy resin, are mixed in such a ratio that the curing agent is present in a stoichiometric amount that is 50-120 %, more preferably 50-100 % and still more preferably 60-90 %, based on the number of reactive groups in the curing agent relative to the number of reactive groups present in the epoxy resin; and
(ii) optionally a filler,
wherein the wt% is based on the total weight of the primer coating composition.

Another preferred primer coating composition and primer layer present in the coating system of the present invention comprises:
(i) 40-90 wt% of an epoxy binder resin and a curing agent for the epoxy resin selected from the group of DICY, OTB, 2-phenyl-2-imidazoline and phenolic hardener;
(ii) 0-55 wt% of a filler, preferably feldspar or barium sulphate and
(iii) 0-30 wt% of a pigment;
wherein the wt% is based on the total weight of the primer coating composition.

Another preferred primer coating composition and primer layer present in the coating system of the present invention comprises:
(i) 55-65 wt% of epoxy binder resin and a curing agent for the epoxy resin selected from the group of DICY, OTB, and 2-phenyl-2-imidazoline, preferably DICY and OTB;
(ii) 30-40 wt% of a filler, preferably feldspar or barium sulphate; and
(iii) 0-5 wt% of a pigment;
wherein the wt% is based on the total weight of the primer coating composition.

Another preferred primer coating composition and primer layer present in the coating system of the present invention comprises:
(i) 40-90 wt% of a binder system comprising a polyester binder resin cured with an epoxy binder resin; and
(ii) 0-55 wt% of a filler, preferably feldspar or barium sulphate,
wherein the wt% is based on the total weight of the primer coating composition.

Another preferred primer coating composition and primer layer present in the coating system of the present invention comprises:
(i) an epoxy resin having an EEW of 190-1950 g/eq selected from the group of bisphenol A epoxy type 2-7, bisphenol A epoxy type 3, bisphenol F, brominated bisphenol A epoxy, o-cresol and novolac modified epoxy; and a polyester resin having an acid value of 28-80 mgKOH/g, where the weight ratio of polyester resin to epoxy resin is 50:50, 60:40 or 70:30; and
(ii) optionally a filler.

Another preferred primer coating composition and primer layer present in the coating system of the present invention comprises:
(i) 55-65 wt% of an epoxy resin having an EEW of 190-1950g/eq selected from the group of bisphenol A epoxy type 2-7, bisphenol A epoxy type 3, bisphenol F, brominated bisphenol A epoxy, o-cresol and novolac modified epoxy; and a polyester resin having an acid value of 28-80 mgKOH/g, where the weight ratio of polyester resin to epoxy resin is 50:50, 60:40 or 70:30;
(ii) 30-40 wt% of feldspar or barium sulphate; and
(iii) 0-5 wt% of a pigment:
   wherein the wt% is based on the total weight of the primer coating composition.

The primer coating composition of the invention optionally comprises additional ingredients such as pigments, degassing agent, flow additive, leveling agent as well as additives considered desirable by the skilled person for the specific coating.

### Topcoat coating composition and topcoat layer

A topcoat is needed to seal the surface of the intumescent layer. With the protection of a topcoat, the fire resistance performance will not be compromised during the whole service life of the electric car.

The coating composition used to prepare the topcoat layer is referred to herein as the topcoat coating composition. It is preferably a powder coating composition. Preferably the topcoat coating composition and topcoat layer comprises a binder system comprising a binder selected from epoxy resin, polyester resin, or combinations thereof and curing agent.

The topcoat coating composition and topcoat layer comprises a binder system. The binder resin is selected from the group consisting of epoxy resins, polyester resins and/or mixtures thereof. Preferably the topcoat coating composition and topcoat layer comprise a filler.

Thus a preferred topcoat coating composition and in a preferred coating system of the present invention, the topcoat coating composition and layer comprises:
said topcoat layer comprises:
(i) a binder system comprising binder selected from epoxy resin, polyester resin, or combinations thereof and curing agent; and
(ii) optionally a filler, preferably feldspar or barium sulphate.

The amount of binder system, i.e. binder resin and curing agent combined, present in the topcoat coating composition and topcoat layer is preferably 40-90 wt%, more preferably 45-80 wt%, and still more preferably 50-70 wt%, based on the total weight of the topcoat coating composition.

The topcoat coating composition is preferably prepared by an analogous method to that described above for the powder coating composition of the present invention.

### Epoxy resin

The topcoat coating composition and topcoat layer preferably comprises an epoxy resin. The epoxy resin is preferably a solid epoxy resin. Epoxy resins used in the primer layer, intumescent layer and topcoat layer may be the same or different.

Preferred epoxy resins present in the topcoat coating composition and topcoat layer have an epoxy equivalent weight (EEW) of 190-1950 g/eq, more preferably 380 to 1000 g/eq and still more preferably 380-900 g/eq.

There are two main categories of epoxy resins, glycidyl epoxy resins and non-glycidyl epoxy resins. Some classes of glycidyl epoxy resins include glycidyl-ether epoxy resins, glycidyl-ester epoxy resins and glycidyl-amine epoxy resins. Some classes of non-glycidyl epoxy resins include aliphatic epoxy resin and cycloaliphatic epoxy resin.

Preferably the solid epoxy resin present in the topcoat coating composition and topcoat layer comprises a glycidyl epoxy resin and more preferably a glycidyl-ether epoxy resin. Glycidyl-ether epoxy resins are generally prepared via a condensation reaction of a dihydroxy compound and epichlorohydrin. Preferably the dihydroxy compound is a bisphenol compound.

Representative examples of solid epoxy resins suitable for use in the topcoat coating composition and topcoat layer include bisphenol A based epoxy resins, bisphenol F based epoxy resins, novolac-modified bisphenol A based epoxy resin, isocyanate modified bisphenol A epoxy resin, cresol novolac type epoxy resin, O-cresol epoxy resin, silane modified bisphenol A epoxy resin, rubber modified bisphenol A epoxy resin, silicone modified bisphenol A epoxy resin, halogenated bisphenol A epoxy resin, and mixtures thereof. In a preferred topcoat coating composition and topcoat layer, the solid epoxy resins are selected from bisphenol A based epoxy resins, bisphenol F based epoxy resins, novolac-modified bisphenol A based epoxy resin, isocyanate modified bisphenol A epoxy resin, cresol novolac type epoxy resin, O-cresol epoxy resin, brominated bisphenol A epoxy resin and mixtures thereof. In a particularly preferred topcoat coating composition and topcoat layer, the solid epoxy resins are selected from bisphenol A based epoxy resins, novolac-modified bisphenol A based epoxy resin, bisphenol F epoxy resin, isocyanate modified bisphenol A epoxy resin, brominated bisphenol A epoxy resin and mixtures thereof. Bisphenol A based epoxy resin, novolac-modified bisphenol A based epoxy resin, brominated bisphenol A epoxy resin and mixtures thereof are particularly preferred.

Preferred solid epoxy resins, e.g. bisphenol A based epoxy resins, novolac-modified bisphenol A based epoxy resins, present in the topcoat coating composition and topcoat layer have an equivalent epoxy weight (EEW) of 190-1950 g/eq, more preferably 380 to 1000 g/eq and still more preferably 380-900 g/eq. It is believed that the EEW plays an important role in the performance of the coating. Epoxy resin having a relatively lower EEW tends to have a lower viscosity and better wetting properties, and thereby better adhesion, but too low EEW gives rise to sagging and/or bubbles in the final coating. On the other hand, epoxy resin with a relatively high EEW tends to slow down degassing of the air in the coating as it cures. Moreover, if the EEW of the epoxy resin is too low or too high, the composition is challenging to process during coating and the final coating produced from the composition tends to have a poor appearance.

Suitable epoxy resins are available commercially. Representative examples of suitable epoxy resins include KD-213, KD-214C, KD-242K, KD-2200, KD-242G, KD-243G, KD-2103, KD-214M, KD-2203, KD-2104, KD214L, KD-9002, KD-9003, KD-9004, KD-213C, KD-213H, YDB-400, D.E.R 6805, NPCN-704, D.E.R. 6224, D.E.R. 6225, D.E.R. 662E, KD-211G, D.E.R. 662UH, D.E.R. 6635, D.E.R. 663U, D.E.R. 663UE, D.E.R. 664, D.E.R. 664U, D.E.R. 664UE, D.E.R. 672U D.E.R. 6510HT, YDCN-500-90P, BE501H, BE502L, BE502, BE503L, BE503, BE504, BE504H, BE505H, BE507, BEB-400YD-017, BE574P, BFE107, MOE-380, MOE-400, CNE202, CNE220, CNE220H, BE502S, BE503S, NPES-901, NPES-901H, NPES-902, NPES-902H, NPES-903K, NPES-903, NPES-903H, NPES-904, NPES-303, NPES-904H, NPES-304, NPEB-400, NPES-907, NPCN-704 and NPER-450.

The topcoat composition and topcoat layer of the coating system of the present invention preferably comprises 30-67 wt%, more preferably 43-62 wt% and still more preferably 46-58 wt% of epoxy resin, based on the total weight of the topcoat coating composition.

### Epoxy curing agent

The topcoat coating composition and topcoat layer comprises a curing agent. The curing agent reacts with the epoxy resin during curing to form a coating, e.g. a film coating. The curing agent therefore facilitates the provision of a coating composition with an acceptable cure time.

The curing agent present in the topcoat coating composition and topcoat layer preferably comprises DICY or its derivatives, OTB, phenolic hardener, acid anhydrides, an imidazole or an imidazoline ring. More preferably the curing agent present in the topcoat coating composition and topcoat layer comprises DICY, OTB, phenolic hardener, acid anhydrides or an imidazoline ring.

DICY is the most widely used crosslinking agent for epoxy powder coating. It is a white solid crystalline compound. The amino hydrogens present in the structure of DICY can react with the oxirane rings of epoxy resins. Suitable DICY for curing epoxy resins are available commercially. Representative examples of suitable DICY include Casamid DMPF from Thomas Swan, CP-1 from Anqing F&F Chemical.

OTB is a derivative from DICY which provide good solubility in the epoxy resin. Commercially available OTB include HT2844 from Hutsman, HT2855 from Anqing F&F chemical and Casamid 710 from Thomas Swan.

Phenolic hardener is prepared by step-growth of polymerization of phenols with aldehydes with excess of phenols. It can also be prepared by condensation of epoxy resins with a molar excess of phenolic compounds, there are also other ways of preparation of the phenolic ended materials used as crosslinker for epoxy resins. They normally have a hydroxy equivalent weight ranging between 230-260 g/eq. Commercially available phenolic hardeners include KD407 and KD410 from Kukdo.

Acid anhydrides are low molecular weight acid anhydrides such as phthalic anhydride, maleic anhydride, trimellitic anhydride and pyromellitic dianhydride (PMDA) which can be used for curing epoxy resins. PMDA can also react with 2-phenyl imidazoline to form a matting curing agent for powder. These materials are widely commercially available.

An imidazoline ring could be used as curing agent for epoxy resin. A preferred curing agent present in the topcoat coating composition and topcoat layer comprises 2-phenyl-2-imidazoline (CAS number 936-49-2). 2-phenyl-2-imidazoline for use in the topcoat coating composition and topcoat layer is available commercially, e.g. under the trade name HC31 from Huangshan Huahui Technology Co. Ltd, under the tradename Vestagon B31 from Evonik Degussa Coatings & Colour and under the tradename MB 31 from Huangshan Deping Chemical Co. Ltd.

It will be appreciated that the curing agent and the epoxy resin need to react in order to cure the coating. The suitable amount of curing agent and epoxy resin depends on the relative numbers of reactive groups, i.e. epoxide in epoxy resin and reactive groups in curing agent.

It is preferred if these components are mixed in such a ratio that the curing agent is present in a stoichiometric amount that is 80-120 %, more preferably 90-115 % and still more preferably 100-110 %, based on the number of reactive groups in the curing agent relative to the number of reactive groups present in the epoxy resin.

Preferred curing agents for the topcoat coating composition and topcoat layer are DICY, OTB, 2-phenyl-2-imidazoline and phenolic hardener. More preferred curing agents for the topcoat coating composition and topcoat layer are DICY, OTB and 2-phenyl-2-imidazoline, and still more preferably DICY and OTB.

Generally, the amount of DICY or OTB curing agent present (in wt%) in the topcoat coating composition is preferably 1.5-10 wt%, more preferably 2.5-7 wt%, and still more preferably 3-5 wt%, based on the weight of epoxy resin present.

Generally, the amount of phenolic hardener curing agent present (in wt%) in the topcoat coating composition is preferably 10-45 wt%, more preferably 15-40 wt%, and still more preferably 18-35 wt%, based on the amount of epoxy resin present.

Generally, the amount of acid anhydride curing agent present (in wt%) in the topcoat coating composition is preferably 3.5-8.5 wt%, more preferably 4-8 wt%, and still more preferably 4.6-7.5 wt%, based on the amount of epoxy resin present.

Generally, the amount of 2-phenyl-2-imidazoline curing agent present (in wt%) in the topcoat coating composition is preferably 3.0-8.0 wt%, more preferably 3.5-7.5 wt%, and still more preferably 4.0-7.0 wt%, based on the amount of epoxy resin present.

### Polyester resin

The topcoat coating composition and topcoat layer may comprise a polyester resin. When present, the polyester resin is preferably a carboxylated polyester resin and more preferably a saturated carboxylated polyester resin.

The acid value of the carboxylated polyester resin present in the topcoat coating composition and topcoat layer of the present invention is preferably 16-80 mgKOH/g depending on the type of curing agent used.

Carboxylated polyester resin present in the topcoat coating composition and topcoat layer may be cured with epoxy resin or with TGIC.

### Carboxylated polyester resin cured with epoxy resin

BPA epoxy resins, cross-linked with carboxylic acid-terminated polyester resins, e.g. having a Mn of a few thousand, are called hybrid powder coatings. Their properties are intermediate between epoxy and polyester resins and produce coatings with intermediate properties. Most are derived from neopentyl glycol (NPG) and terephthalic acid (TPA) with smaller amounts of additional monomers to adjust the Tg to the desired level and to increase the degree of polymerization (fn) above two. The acid value of the carboxylated polyester resin can vary from 28-80 mgKOH/g, depending on the weight ratio of polyester to epoxy. The weight ratio between polyester and epoxy having an EEW value of 650-750 g/eq may be 50:50; 60:40; and 70:30.

Typical polyester resins with an acid value of 66-80 mgKOH/g for, e.g. 50:50 hybrid powder coating compositions are Uralac P5127, P4055 from DSM, Crycoat 1514-2, 1540-0 and 1573-0 from Allnex SJ3#-B, SJ3AT, SJ3301 from Shenjian, FL-1050, FL-1054, FL-1058 from Fenglin and GH-1150, GH-1156, GH1159 from Khua.

Typical polyester resins with an acid value of 46-60 mgKOH/g for, e.g. 60:40 hybrid powder coating compositions are Uralac P5065, P4260 and P6060 form DSM, Crycoat 1622-0, 1631-0 and 1696-0 from Allnex, SJ5A, SJ5BT-6 and SJ6711 from Shenjian; FL-1060, FL-1064, FL1067 from Fenglin, GH-1164, GH-1160, GH-1261 from Khua.

Typical polyester resins with an acid value of 28-38 mgKOH/g for, e.g. 70:30 hybrid powder coating compositions are Uralac P775, P5070 and P5170, Crycoat 1702-0, 1770-0 and 1781-0 from AllnexSJ6A, SJ6B and SJ7301 from Shenjian; GH-1171, GH-1172, GH-1176 from Khua, FL-1071, FL-1074 and FL-1176 from Fenglin.

The topcoat coating composition and topcoat layer of the coating system preferably comprises 15-60 wt%, more preferably 20-55 wt% and still more preferably 25-49 wt% of polyester resin, based on the total weight of the topcoat coating composition. The topcoat coating composition and topcoat layer of the coating system preferably comprises 5-45 wt%, more preferably 10-40 wt% and still more preferably 15-35 wt% of epoxy resin, based on the total weight of the topcoat coating composition.

### Carboxylated polyester resin cured with TGIC

The carboxylated polyester resin present in the topcoat coating composition and topcoat layer is preferably derived from neopentyl glycol (NPG) and terephthalic acid (TPA) and/or isophthalic acid (IPA). These resins are called outdoor resin. Normally outdoor resin is cured with triglycidyl isocyanurate (TGIC) or its derivatives.

Typical such polyester resins present in the topcoat coating composition and topcoat layer include resins from Allnex, DSM, Shenjian, Khua and Fenglin.

Suitable polyester resins with an acid value of 16-26 mgKOH/g, e.g. when the weight ratio of polyester to TGIC is 96:4 include Uralac P3800 from DSM, Crycoat 2491-2, 2452-2 from Allex; SJ4G, SJ4580 and SJ4868 from ShenjianGH4405, GH4408 from Khua, FL-2031, FL2032 and FL2034 from Fenglin.

Suitable polyester resins with an acid value of 28-38 mgKOH/g, e.g. when the weight ratio of polyester to TGIC is 73:7 include GH2219, GH2205, GH2208 from Khua, FL-2011, FL-2013, FL-2017 from Fenglin. Uralac P2400, P5300 and P6300 from DSM; Crycoat 2441-2, 2430-0 and 2498-0 from Allnex, SJ4E, SJ4ET and SJ4868 from Shenjian.

Suitable polyester resins with an acid value of 46-58 mgKOH/g, e.g. when the weight ratio of polyester to TGIC is 90:10 include SJ4H, SJ4581 and SJ4803 from Shenjian, GH-4403, GH-4401 from Khua, FL-2033, FL-2037 and FL2047 from Fenglin; Uralac P2200, P2240 and P2244 from DSM. Crycoat 2431-0, 2490-2 from Allnex.

The amount of polyester resin present in the topcoat coating composition and topcoat layer when the curing agent is TGIC, is preferably 35-67 wt%, more preferably 43-62 wt%, and still more preferably 48-58 wt%, based on the total weight of the powder coating composition.

TGIC is the most important curing agent for carboxylated polyesters. It is the most popular crosslinker for polyester powder coating for outdoor use. TEPIC-G from Nissan, PT810 from Hustman, TGIC from Huangshan Huahui are commercially available forms of TGIC.

The amount of TGIC present in the topcoat coating composition and topcoat layer is preferably 1.0-5.5 wt%, more preferably 1.5-4.7 wt%, and still more preferably 2.0-4.0 wt%, based on the weight of polyester resin.

### Fillers

The topcoat coating composition and topcoat layer preferably comprises filler.

Preferred fillers present in the topcoat coating composition and topcoat layer are inorganic fillers. Suitable inorganic filler particles exist in different forms, e.g. spherical, lamellar, nodular and irregular.

The fillers present in the topcoat coating composition and topcoat layer preferably have a D₅₀ of 0.5 to 25 µm, more preferably 1-20 µm, still more preferably 1-15 µm and yet more preferably 1-10 µm.

In a preferred topcoat coating composition and topcoat layer the filler is selected from barium sulphate, calcium carbonate, mica, wollastonite (calcium metasilicate), nepheline, kaolin, dolomite, diatomite, alumina, aluminium hydroxide, feldspar and mixtures thereof and more preferably barium sulphate, preferably precipitated barium sulphate, kaolin, feldspar and mixtures thereof. In a particularly preferred topcoat coating composition and topcoat layer the filler is selected from barium sulphate, calcium carbonate, feldspar and mixtures thereof.

The topcoat coating composition and topcoat layer may comprise a single filler or a combination of two or more fillers. In some preferred topcoat coating compositions and topcoat layers, a single filler is present. When a single filler is present, the filler is preferably selected from barium sulphate, wollastonite (calcium metasilicate), nepheline, dolomite, diatomite, alumina, aluminium hydroxide, feldspar and mixtures thereof.

Suitable fillers are available commercially. Representative examples of suitable fillers include Blanc Fine GM-80 from Gemme Speciality Chemicals Co. Ltd, Blanc Fixe L from Yillong Chemical Group Limited, GL-2500 from Jiangsu Qunxin powder technology Co. Ltd, Specswhite and Micro Mica W1 from Imerys Minerals Ltd, JLH-60D and H6 from Shenzhen JinHaoHui Industrial Development Co. Ltd, and GA-1 from Chuzhou Gera Minerals Co. Ltd. and feldspar, JYJC-12 from Henan Nonferrous Jinyuan Industrial Co., Ltd

The total amount of filler present in the topcoat coating composition and topcoat layer is preferably 0-55 wt%, more preferably 25-50 wt%, and still more preferably 30-40 wt% based on the total weight of the topcoat coating composition.

### Degassing agent

The topcoat coating composition and topcoat layer preferably comprises a degassing agent. Conventional, commercially available, degassing agents may be used.

Representative examples of suitable degassing agents include cyclohexane dimethanol bisbenzoate, benzoin, benzoin derivatives and mixtures thereof. Preferably the degassing agent is benzoin or a benzoin derivative, and particularly preferably benzoin.

Suitable degassing agents are available from a wide range of commercial suppliers, e.g. benzoin is available under the tradename Miwon benzoin from Miwon Speciality Chemical Co. Ltd, and as benzoin from Orgamine Chemicals PVT Ltd, and Ningbo South Sea Chemical Co. Ltd.

A preferred topcoat coating composition and topcoat layer comprises 0.15-0.45 wt%, more preferably 0.17-0.4 wt% and still more preferably 0.2-0.35 wt% degassing agent, based on the total weight of the topcoat coating composition.

### Flow additive

The topcoat coating composition and topcoat layer preferably comprises a flow additive. The presence of a flow additive tends to increase surface smoothness, e.g. by reducing or eliminating surface imperfections such as craters, fish-eyes and pin holes. This is achieved by improving the melt-flow characteristics of the topcoat coating composition.

Conventional, commercially available, flow additives may be used, e.g. PCL-100 from Kscnt Co. Ltd, Rheoflow PLP 100H(A) from KS Chemical Co. Ltd and Resiflow PV 88 from Worlee-Chemie GmbH.

Representative examples of suitable flow additives include acrylics, silicon containing compounds, and fluorine-based polymers. A preferred topcoat coating composition and topcoat layer comprise a flow additive, which is an acrylic.

A preferred topcoat coating composition and topcoat layer comprises 0.01-5 wt%, more preferably 0.1-3 wt% and still more preferably 0.5-1.5 wt% flow additive, based on the total weight of the topcoat coating composition.

### Colour pigments

The topcoat coating composition and topcoat layer preferably comprises at least one colour pigment. The colour pigment may be inorganic or organic colour pigments.

Representative examples of suitable inorganic colour pigments for inclusion in the topcoat coating composition and topcoat layer include titanium dioxide, iron oxide red, black pigments, yellow pigments, chrome pigments, ferro-manganese black, carbon black and combinations thereof.

Representative examples of suitable organic pigments for inclusion in the topcoat coating composition of the present invention include phthalocyanine, azo, dioxazines, perylene, anthraquinone, thioindigo, isodibenzanthrone, triphendioxane, quinacridone pigments, vat dye pigments and combinations thereof.

Preferred colour pigments for inclusion in the topcoat coating composition and topcoat layer are selected from titanium dioxide, carbon black, organic red pigments, organic yellow pigments, organic blue pigments, ultramarine blue, and organic green pigments.

Another preferred topcoat coating composition and topcoat layer comprises less than 5 wt%, more preferably less than 2 wt%, and still more preferably less than 0.8 wt% carbon black.

Suitable colour pigments are commercially available, e.g. NTR-606, Beablack 2669F, Beablack 2870F, Red 122, DPP Red SR2P, Yellow 139, Sudafast blue 2789, Blue 51, Green 2730K, ferro-manganese black.

Generally speaking, colour pigments should be included in the topcoat coating composition in the minimum amount necessary to give the desired colour. The amount of colour pigment required, in part, depends on the type of colour pigment. The skilled person will be able to determine suitable amounts for different types of pigments.

When present, the amount of colour pigment present in the topcoat coating composition and topcoat layer is preferably 0.05-30 wt%, more preferably 0.1-25 wt%, and still more preferably 0.3-20 wt%, based on the total weight of the topcoat coating composition.

### Levelling agent

The topcoat coating composition and topcoat layer preferably comprises a levelling agent. Examples of suitable levelling agents include copolymers of methylacrylate and butylacrylate.

Suitable levelling agents are commercially available, e.g. BLC701B from Ningbo South Sea Chemical Co. Ltd. and WK701 from Ningbo Wecan Chemical Co., Ltd. The levelling agents enhance the compositions melt-flow characteristics and help eliminate surface defects during curing.

When present, the amount of levelling agent present in the topcoat coating composition and topcoat layer is preferably 0.01-5 wt%, more preferably 0.1-3 wt% and still more preferably 0.5-1.5 wt%, based on the total weight of the topcoat coating composition.

### Additives

The topcoat coating composition and topcoat layer optionally comprises one or more additives. Examples of additives that are optionally present include amino alcohols, adhesion promoters, gloss modifiers, drying agents, waxes, ethylene bis stearamide (EBS), antioxidants, rheology additives, matting agent and surface modifying agents. Preferred additives that are present in the topcoat coating composition and topcoat layer are gloss modifiers, rheology modifiers, surface modifying agents, matting agent and mixtures thereof. Representative examples of suitable rheology modifiers are hydrogenated castor oil and low melting polyethylene waxes.

Additional additives are preferably present in the topcoat coating composition and topcoat layer an amount of 0-10 wt%, more preferably 0.1-5 wt%, still more preferably 0.2-4 wt% and particularly preferably 0.5-3 wt%, based on the total weight of the topcoat coating composition.

### Preferred topcoat coating compositions and topcoat layers

One preferred topcoat coating composition and topcoat layer of a coating system of the present invention comprises:
(i) a binder system comprising a binder and a curing agent selected from the group consisting of an epoxy binder resin and a curing agent for the epoxy resin, a polyester binder resin cured with an epoxy binder resin, or a polyester binder resin cured with TGIC; and
(ii) optionally a filler, preferably feldspar or barium sulphate.

Another preferred topcoat coating composition and topcoat layer of a coating system of the present invention comprises:
(i) 40-90 wt% of a binder system comprising a binder and a curing agent selected from the group consisting of an epoxy binder resin and a curing agent for the epoxy resin, a polyester binder resin cured with an epoxy binder resin, or a polyester binder resin cured with TGIC, and
(ii) 0-55 wt% of a filler, preferably feldspar or barium sulphate;
wherein the wt% is based on the total weight of the topcoat coating composition.

Another preferred topcoat coating composition and topcoat layer of a coating system of the present invention comprises:
(i) 40-90 wt% of a binder system comprising a binder and a curing agent selected from the group consisting of an epoxy binder resin and a curing agent for the epoxy resin, a polyester binder resin cured with an epoxy binder resin, or a polyester binder resin cured with TGIC;
(ii) 0-55 wt% of a filler, preferably feldspar or barium sulphate, and
(iii) 0-30 wt% of a pigment;
wherein the wt% is based on the total weight of the topcoat coating composition.

Another preferred topcoat coating composition and topcoat layer of a coating system of the present invention comprises:
(i) 40-90 wt% of an epoxy binder resin and a curing agent for the epoxy resin selected from the group of DICY, OTB, 2-phenyl-2-imidazoline and phenolic hardener;
(ii) 0-55 wt% of a filler, preferably feldspar, and
(iii) 0-30 wt% of a pigment;
wherein the wt% is based on the total weight of the topcoat coating composition.

Another preferred topcoat coating composition and topcoat layer of a coating system of the present invention comprises:
(i) 55-65 wt% of an epoxy binder resin and a curing agent for the epoxy resin selected from the group of DICY, OTB and 2-phenyl-2-imidazoline, preferably DICY and OTB;
(ii) 30-40 wt% of a filler, preferably feldspar, and
(iii) 0-5 wt% of a pigment;
wherein the wt% is based on the total weight of the topcoat coating composition.

Another preferred topcoat coating composition and topcoat layer of a coating system of the present invention comprises:
(i) 50-80 wt% of an epoxy resin having an EEW of 190-1950 g/eq selected from the groups of bisphenol A epoxy type 2-7, bisphenol A epoxy type 3, bisphenol F, brominated bisphenol A epoxy, o-cresol and novolac modified epoxy and 1-5 wt% of a curing agent selected from DICY, OTB, 2-phenyl-2-imidazoline and phenolic hardener; and
(ii) optionally a filler,
wherein the wt% is based on the total weight of the topcoat coating composition.

Another preferred topcoat coating composition and topcoat layer present in the coating system of the present invention comprises:
(i) 55-65 wt% of an epoxy resin having an EEW of 190-1950 g/eq selected from the group of bisphenol A epoxy type 2-7, bisphenol A epoxy type 3, bisphenol F, brominated bisphenol A epoxy, o-cresol and novolac modified epoxy, and a curing agent selected from DICY, OTB and 2-phenyl-2-imidazoline, preferably DICY and OTB;
(ii) 30-40 wt% of feldspar or barium sulphate; and
(iii) 0-5 wt% of a pigment:
   wherein the wt% is based on the total weight of the primer coating composition.

Another preferred topcoat coating composition and topcoat layer of a coating system of the present invention comprises:
(i) 40-90 wt% of a binder system comprising a polyester binder resin cured with an epoxy binder resin;
(ii) 0-55 wt% of a filler, preferably feldspar or barium sulphate;
wherein the wt% is based on the total weight of the primer coating composition.

Another preferred topcoat coating composition and topcoat layer of a coating system of the present invention comprises:
(i) an epoxy resin having an EEW of 190-1950 g/eq selected from the groups of bisphenol A epoxy type 2-7, bisphenol A epoxy type 3, bisphenol F, brominated bisphenol A epoxy, o-cresol and novolac modified epoxy; and a polyester resin having an acid value of 28-80 mgKOH/g, where the weight ratio of polyester to epoxy is 50:50, 60:40 or 70:30; and
(ii) optionally a filler.

Another preferred topcoat coating composition and topcoat layer of a coating system of the present invention comprises:
(i) 40-90 wt% of a binder system comprising a polyester binder resin cured with TGIC, wherein the weight ratio of polyester resin to TGIC is 90 : 10 to 96.5 : 3.5;
(ii) 0-55 wt% of a filler, preferably feldspar ort barium sulphate, and
(iii) 0-30 wt% of a pigment;
wherein the wt% is based on the total weight of the topcoat coating composition.

Another preferred topcoat coating composition and topcoat layer of a coating system of the present invention comprises:
(i) 35-67 wt% of a polyester resin having an acid value of 16-58 mgKOH/g cured with TGIC, wherein the amount of TGIC is 1-5.5 wt%, based on the weight of polyester resin;
(ii) 20-30 wt% of a filler, preferably feldspar or barium sulphate, and
(iii) 0-8.4 wt% of a pigment;
wherein the wt% is based on the total weight of the topcoat coating composition.

The topcoat coating composition and topcoat layer of a coating system of the present invention optionally comprises additional ingredients such as pigments, degassing agent, flow additive, and leveling agent as well as additives considered desirable by the skilled person for the specific coating.

### Preferred coating systems

The coating system of the present invention is preferably resistant to hydrothermal aging, for example when the intumescent system is put into a constant temperature and humidity box and tested for 1000 hours at 85 °C and 85% RH. After the humidity test, the adhesion of the coating is preferably Gt0, and the coating system still passes fire resistance testing, for example, as set out in the examples.

The coating system of the present invention is preferably resistant to water immersion. For example, when the coating system is soaked in a water bath at a temperature 40 °C for 480 hours, preferably the surface does not bubble, does not fall off, adhesion is Gt0, and the coating system still passes fire resistance testing, for example, as set out in the examples.

The coating system of the present invention preferably has good adhesion to a substrate, preferably a metal substrate, e.g. aluminium substrate. Preferably the coating system passes the cross-cut test as described in ISO 2409:2013 (E).

A preferred coating system of the present invention comprises:
- a primer layer comprising a primer coating composition comprising:
   (i) a binder system comprising a binder and a curing agent selected from the group consisting of an epoxy binder resin and a curing agent for the epoxy resin, and a polyester binder resin cured with an epoxy binder resin; and
   (ii) optionally a filler, preferably feldspar or barium sulphate;
- an intumescent layer comprising an intumescent powder coating composition comprising:
   1) a binder system comprising a binder resin and a curing agent;
   2) an intumescent component comprising ammonium polyphosphate and preferably melamine and/or pentaerythritol; and
   3) carbon fiber; and
- a topcoat layer comprising a topcoat coating composition comprising:
   (i) a binder system comprising a binder and a curing agent selected from the group consisting of an epoxy binder resin and a curing agent for the epoxy resin, a polyester binder resin cured with an epoxy binder resin, and a polyester binder resin cured with TGIC; and
   (ii) optionally a filler, preferably feldspar or barium sulphate.

Another preferred coating system of the present invention comprises:
- a primer layer comprising a primer coating composition comprising:
   (i) 40-90 wt% of a binder system comprising a binder resin and a curing agent selected from the group consisting of an epoxy binder resin and a curing agent for the epoxy resin, and a polyester binder resin cured with an epoxy binder resin;
   (ii) 0-55 wt% of a filler, preferably feldspar or barium sulphate;
- an intumescent layer comprising an intumescent powder coating composition comprising:
   (a) 35-67 wt% of a binder system comprising a binder resin and a curing agent;
   (b) 25-63 wt% of an intumescent component comprising ammonium polyphosphate and preferably melamine and/or pentaerythritol; and
   (c) 2-15 wt% of carbon fiber; and
- a topcoat layer comprising a topcoat coating composition comprising:
   (iii) 40-90 wt% of a binder system comprising binder resins and curing agents selected from the group consisting of an epoxy binder resin and a curing agent for the epoxy resin, a polyester binder resin cured with an epoxy binder resin, and a polyester binder resin cured with TGIC; and
   (iv) 0-55 wt% of a filler, preferably feldspar or barium sulphate.

Another preferred coating system of the present invention comprises:
- a primer layer comprising a primer coating composition comprising:
   (i) 40-90 wt% of a binder system comprising an epoxy binder resin and a curing agent for the epoxy resin;
   (ii) 0-55 wt% of a filler, preferably feldspar or barium sulphate;
- an intumescent layer comprising an intumescent powder coating composition comprising:
   (a) 35-67 wt% of a binder system comprising a binder resin and a curing agent;
   (b) 25-63 wt% of an intumescent component comprising ammonium polyphosphate and preferably melamine and/or pentaerythritol; and
   (c) 2-15 wt% of carbon fiber; and
- a topcoat layer comprising a topcoat coating composition comprising:
   (iii) 40-90 wt% of a binder system comprising an epoxy binder resin and a curing agent for the epoxy resin; and
   (iv) 0-55 wt% of a filler, preferably feldspar or barium sulphate.

Preferred coating systems of the invention consist of three layers.

### Method of coating a substrate

The present invention also relates to a method for coating a substrate, preferably a metal substrate, with a coating system as hereinbefore described comprising:
(i) applying a primer composition, preferably a powder primer composition, and more preferably a primer composition as hereinbefore described, to said substrate and curing said composition to form a primer layer;
(ii) applying an intumescent powder coating composition as hereinbefore described to said primer layer and curing said composition to form an intumescent layer; and
(iii) applying a topcoat composition, preferably a powder topcoat composition, and more preferably a topcoat composition as hereinbefore described to said intumescent layer and curing to form a topcoat layer.

In a preferred method, the coating system consists of three layers.

The primer coating composition and the topcoat coating composition of the coating system may be applied by any conventional powder coating method, e.g. electrostatic spraying. A cold substrate may, for example be coated in a spray booth. Coating techniques are well known in the art and will be familiar to the skilled man.

In a preferred method the primer composition is cured at a temperature of 170-200 °C for 10-30 minutes.

In a further preferred method, the intumescent powder coating composition is cured at a temperature of 170-200 °C for 10-30 minutes.

In a further preferred method the topcoat composition is cured at a temperature of 170-200 °C for 10-30 minutes.

The primer coating composition and the topcoat coating composition are each cured following their application. Curing may be carried out by heating, e.g. in one or more ovens, which enables the particles to melt, fuse and cure. Optionally, the primer and topcoat coating compositions may be cured by placing the substrate in a post cure oven.

The primer coating composition is preferably applied to the substrate with a corona gun. Preferably it is applied in a thickness of 30-300 µm, preferably 50-250 µm and most preferably 60-200 µm. The substrate coated with the primer coating composition is preferably cured at 170-200 °C for 10-30 minutes, e.g. in a convection oven, or alternatively in combination with an infrared oven. The substrate coated with the primer layer is preferably cooled down before the intumescent layer is applied.

The intumescent powder coating composition is preferably applied on top of the cured primer layer at ambient temperature. Preferably it is applied with a corona gun or, if a thickness of more than 350 µm is desired, a combination of a corona gun and a positively charged gun. Preferably it is applied to a thickness of 150-850 µm, preferably 200-850 µm and most preferably 250-850 µm. After application, the intumescent layer is preferably cured in a convection oven or an infrared oven or a combination of both ovens. Preferably curing is at a (substrate) temperature of 170-200 °C for 10-30 minutes, before it is cooled down to ambient temperature.

The topcoat coating composition is preferably applied on top of the cured intumescent layer at ambient temperature. Preferably it is applied with a corona gun or a combination of a corona gun and a positively charged gun. Preferably it is applied to a thickness of 60-300 µm, preferably 90-300 µm and most preferably 120-300 µm. After application, the topcoat layer is preferably cured at 170-200 °C for 10-30 minutes in a convection oven or alternatively in combination with an infrared oven.

### Containers and kits

The present invention also relates to a container containing a powder coating composition, preferably an intumescent powder coating composition, as hereinbefore described. Suitable containers include cardboard boxes, plastic bags, cans and drums.

The present invention also relates to a kit for preparing a coating system as hereinbefore described, comprising:
(i) a first container containing a primer coating composition, preferably a powder primer coating composition and more preferably a primer coating composition as hereinbefore described;
(ii) a second container containing an intumescent powder coating composition as hereinbefore described; and
(iii) a third container containing a topcoat coating composition, preferably a powder topcoat composition and more preferably a topcoat coating composition as hereinbefore described.

Optionally, kits further comprise instructions for preparing the coating system of the present invention.

### Substrates and articles

The present invention also relates to a substrate coated with an intumescent powder coating composition as hereinbefore described or a coating system as hereinbefore described.

The powder coating composition and coating system of the invention may be applied to any substrate. A preferred substrate is metal, and still more preferably the substrate is aluminium or steel. Particularly preferably the substrate is the aluminium or steel surface of a battery pack or other parts of a battery pack, and especially preferably the aluminium and/or steel surface of a battery pack present in a battery assembly, e.g. the battery assembly of an electric vehicle.

The substrate, e.g. aluminium surface of a battery pack, may be partially or completely coated with the powder coating composition or coating system of the invention. Preferably, however, substantially all of the substrate is coated with the powder coating composition or coating system of the invention. In the case of a battery pack, this preferably includes the entirety of the internal walls, and preferably the entirely of the external walls of the battery pack (with the exception of the electrical contacts). In the case of parts in a battery pack, this preferably includes cooling panels, side panels, busbar.

Thus the present invention also provides a battery pack comprising a battery assembly, wherein said battery pack has a coating formed on at least one surface, preferably an interior surface, and said coating is formed from a coating system as hereinbefore described.

If used for battery pack protection, when there is a thermal runaway, the coating system of the present invention can stop the heat generated inside the pack from being transferred to the outside of the battery pack which will slow down or stop the fire or higher temperature from spreading. Also, if the coating system of the present invention is applied to the outside of a battery pack, it can stop the heat of fire generated by the surroundings, e.g. another electric car, from being transferred from the outside to the inside of the battery pack which will slow down or stop the fire or higher temperature from spreading. Overall, this provides increased safety of electric cars and more time for passengers to escape in case of a thermal failure in an EV battery.

The invention will now be described by way of the following non-limiting examples.

### EXAMPLES

### Materials

The polymers and compounds used in the examples were all available commercially. The polymers and compounds used are summarized in the table below.

A4 size Aluminium or steel panels used for preparation for testing were obtained from Chemetall Lab. As purchased, the metal of the panels had been degreased with alkaline, water rinsed, then treated with 9810 silane, 4707 A2 Zirconia, followed by water rinsing and oven drying in an oven at a temperature of 100 °C object temperature.

| Ingredient | Function | Details |
|---|---|---|
| Type 2 epoxy. Solid epoxy resin derived from liquid epoxy resin and Bisphenol-A. | Binder | EEW 500-550 g/eq. Softening point 82-92 °C. Melt viscosity 1000-3500 cps at 150 °C |
| Type 2 epoxy. Solid epoxy resin derived from liquid epoxy resin and Bisphenol-A. | Binder | EEW 600-700 g/eq. Softening point 75-85 °C. Melt viscosity 800-1600 cps at 150 °C |
| Type 3 epoxy. Solid epoxy resin derived from liquid epoxy resin and Bisphenol-A. | Binder | EEW 740-800 g/eq. Softening point 88-98 °C. Melt viscosity 3500-7000 cps at 150 °C |
| Type 3.5 epoxy. Solid epoxy resin derived from liquid epoxy resin and Bisphenol-A. | Binder | EEW 800-900 g/eq. Softening point 90-100 °C. Melt viscosity 2000-5000 cps at 150 °C |
| Type 4 epoxy. Solid epoxy resin derived from liquid epoxy resin and Bisphenol-A. | Binder | EEW 900-1000 g/eq. Softening point 95-105 °C |
| Type 7 epoxy. Solid epoxy resin derived from liquid epoxy resin and Bisphenol-A. | Binder | EEW 1750-1950 g/eq. Softening point 115-125 °C |
| Novolac modified solid epoxy resin derived from liquid epoxy resin and Bisphenol-A. | Binder | EEW 500-575 g/eq. Softening point 75-85 °C |
| Novolac modified solid epoxy resin derived from liquid epoxy resin and Bisphenol-A. | Binder | EEW 750-850 g/eq. Softening point 105-118 °C |
| O-cresol epoxy | Binder | EEW 190-220 g/eq. Softening point 85-95 °C |
| Saturated carboxyl polyester 1 | Binder | Acid value 18-25 mgKOH/g |
| Saturated carboxyl polyester 2 Use in Hybrid system | Binder | Acid value 32-38 mgKOH/g |
| Saturated carboxyl polyester 3 Use in pure polyester system | Binder | Acid value 32-38 mgKOH/g |
| Saturated carboxyl polyester 4 Use in Hybrid system | Binder | Acid value 48-56 mgKOH/g |
| Saturated carboxyl polyester 5 Use in pure polyester system | Binder | Acid value 48-56 mgKOH/g |
| Saturated carboxyl polyester 6 | Binder | Acid value 68-76 mgKOH/g |
| Isocyanuric acid triglycidyl ester (TGIC) | Curing agent | Epoxy equivalent <110 (g/mol) |
| β-hydroxy alkyl amide (HAA) | Curing agent | Hydroxyl equivalent 80±2 g/eq |
| Dicyandiamide (DICY) | Curing agent | Melting point 210 °C, very fine particle size |
| o-Tolylbiguanide (OTB) | Curing agent | Melting point 139 - 143 °C |
| 2-Phenyl-2-imidazoline | Curing agent | ≥99% purity. Solidification point 90-110°C |
| Phenol excess type curing agent (Phenolic harder) | Curing agent | Ph-OH EW (g/eq) 260-290, Softening point 73-85 °C |
| 1,2,4,5-Benzenetetracarboxylic anhydride (PMDA) | Curing agent | Melting point 283-287°C |
| 2-Methylimidazole | Catalyst | Melting point 142-146 °C, white or colorless solid flakes |
| Ammonium polyphosphate | Intumescent component | Polymerization, n>1000; Particle size D₅₀ 5-40um |
| Melamine | Intumescent component | Purity>98%, preference >99.8%, Particle size D₅₀ 3-20 µm |
| Pentaerythritol | Intumescent component | Particle size D₅₀ 3-20 µm |
| Carbon fiber 1 | Charging agent | Length 0.1 mm, resistivity 1.5*10⁻³ (Ω.cm) |
| Carbon fiber 2 | Charging agent | Length 0.2 mm, resistivity 1.5*10⁻³ (Ω.cm) |
| Carbon fiber 3 | Charging agent | Length 0.3 mm, resistivity 1.5*10⁻³ (Ω.cm) |
| Carbon fiber 4 | Charging agent | Length 1 mm, resistivity 1.5*10⁻³ (Ω.cm) |
| Carbon fiber 5 | Charging agent | Length 2 mm, resistivity 1.5*10⁻³ (Ω.cm) |
| Polyethylene glycol (PEG) | Charging agent | Molecular weight 6000, melting point 61 °C |
| Glycerol monostearate | Charging agent | Melting point 60 °C, acid value 2 mgKOH/g |
| Barium titanate | Charging agent | Purity >98% |
| Ferro-manganese black | Black pigment | Fine particle size. Purity >99.2%, spherical, predominant particle size |
| Carbon black | Black pigment | Average particle size D₅₀ 21±2 nm |
| Feldspar | Filler | Micronized |
| Copolymer of methyacrylate and butylacrylate | Levelling agent | Softening point: 95-125 °C |
| Benzoin | Degassing agent | Melting point 134-138 °C |

### Preparation of Powdered Coating Samples

Powder coatings (primer, intumescent and topcoat) were prepared separately using the following procedure:
(1) The raw materials were placed into a mixing tank, according to the corresponding weight percentage for pre-mixing, as shown in the tables below, wherein the amounts of the ingredients are specified in wt% unless otherwise specified. Blending was carried out in the mixing tank in two stages. The first blending time was 3-5 minutes, the rotating speed was 700 r/min, and the working temperature was 20-30 °C. The second blending time was 3-5 minutes, the rotating speed was 900 r/min, and the working temperature was 20-30 °C. The second blending was carried out immediately after the first blending.
(2) A twin-screw extruder was used to melt, mix, disperse and extrude the pre-mixed raw materials uniformly. The temperature of the extruder was 90-110 °C, and the screw frequency was controlled at 30-50 Hz. The extruded mixture was then crushed.
(3) The crushed material was graded and crushed by an ACM mill. The frequency of the disc was 25-35Hz, and the frequency of the classifier was 25-35 Hz.
(4) The finely pulverized materials were classified (i.e. sieved) into powder coatings with a particle size D₅₀ of 30-80 microns.

### Preparation of samples for testing

Panels coated with one layer of intumescent coating for testing were prepared according to the following steps:
1. A4 size Aluminium or steel panels, obtained from Chemetall Lab, were placed in a spray booth.
2. If the desired film thickness could be achieved by corona gun only, this was employed. If the desired film thickness cannot be achieved by corona gun only, a positively charged gun was used to apply the powder first, followed by a corona gun powder spray to achieve a film thickness of 360-390 µm. The sprayed panels were placed in the oven for curing at a temperature of 160-200 °C for 30-10 minutes.

Panels coated with only primer layer or only topcoat layer
1. A4 size Aluminium or steel panels, obtained from Chemetall Lab, were placed in a spray booth.
2. An electrostatic spraying method was used to spray the primer or topcoat powder coating composition onto the panels to a film thickness of 80-180 µm. The sprayed panels were placed in the oven for curing at a temperature of 160-200 °C for 30-10 minutes.

Three-layer coating systems for testing were prepared according to the following steps:
1. A4 size Aluminium or steel panels, obtained from Chemetall Lab, were placed in a spray booth.
2. An electrostatic spraying method was used to spray the primer powder coating composition onto the panels to a film thickness of 80-100 µm. The sprayed panels were placed in the oven for curing at a temperature of 160-200 °C for 10-30 minutes.
3. After cooling, a positively charged gun, followed by a corona gun, was used to spray the intumescent powder coating composition onto the cured primer layer to an intumescent film thickness of 360-390 µm. The sprayed panels were placed in the oven for curing at a temperature of 160-200 °C for 10-30 minutes.
4. After cooling, an electrostatic spraying was used to spray the topcoat powder composition onto the cured intumescent layer to a topcoat film thickness of 160-180 µm. The sprayed panels were placed in the oven for curing at a temperature of 160-200 °C for 10-30 minutes.

Two layer coating (primer layer + intumescent layer) panels for testing were prepared according to the following steps:
1. A4 size Aluminium or steel panels, obtained from Chemetall Lab, were placed in a spray booth.
2. An electrostatic spraying method was used to spray the primer powder coating composition onto the panels to a film thickness of 80-100 µm. The sprayed panels were placed in the oven for curing at a temperature of 160-200 °C for 10-30 minutes.
3. After cooling, a positively charged gun, followed by a corona gun, was used to spray the intumescent powder coating composition onto the cured primer layer to an intumescent film thickness of 360-390 µm. The sprayed panels were placed in the oven for curing at a temperature of 160-200 °C for 10-30 minutes.

Two layer coating (Intumescent layer + topcoat layer) panels for testing were prepared according to the following steps:
1. A4 size Aluminium or steel panels, obtained from Chemetall Lab, were placed in a spray booth.
2. After drying, a positively charged gun, followed by a corona gun, was used to spray the intumescent powder coating composition onto the panel at ambient temperature to a film thickness of 360-390 µm. The sprayed panels were placed in the oven for curing at a temperature of 160-200 °C for 10-30 minutes.
3. After cooling, an electrostatic spraying method was used to spray the topcoat powder composition onto the cured intumescent layer at a topcoat film thickness of 160-180 µm. The sprayed panels were placed in the oven for curing at a temperature of 160-200 °C for 10-30 minutes.

### How to achieve the maximum thickness of the powder coatings

The substrate was sprayed with a positively charged gun first and then sprayed with an electrostatic gun until the powder coating is no longer deposited onto the substrate, or underlying layer.

In order to make the test results comparable, actual film thickness for testing panels is controlled to 370 to 390 µm by controlling the amount of powder used or the application time of the powder.

### Test Methods

### • Fire resistance test (Time of Heat Insulation - THI)

1. Use a clamp to hold the panel vertically, keep the distance between the butane flame gun and the panel at 10 cm. The flame combustion point should be in the middle of the coated panel. Place temperature probe in the middle of backside of the panel to ensure that the flame and the probe are at the same point, with only the panel in between.
2. Turn on the thermometer and ignite the flame gun, ensure the flame is pointing to the middle of the coated panel, adjust flame intensity to maximum, turn on the timer.
3. Record the temperature change over time. If the temperature exceeds 400 °C, stop test and record the time.

### • Water immersion test according to ISO 2812-2

1. Put coated panel into a water bath with deionized water at 23 °C. % of the panel should be immersed for 480 hrs.
2. After the test, rinse the coated panel with clean warm water and dry immediately at 23 °C. Afterwards it was conditioned, under relative humidity of 50 %, for 24 hrs.
3. Carried out the fire resistance test, as described above.

### • Hydrothermal aging, Double 85 test (water uptake at elevated temperature) according to GB/T 2423.50

1. Put coated panel into a temperature and humidity test chamber, set at 85 °C, 85% relative humidity, test for 1000 hrs.
2. After the test, rinse the coated panel with clean warm water and dry immediately at 23 °C. Afterwards it was conditioned, under relative humidity of 50%, for 24 hrs.
3. Carried out fire resistance test.

### • NSS test (Neutral salt spray) according to ISO 9227

1. Put coated panel into neutral salt spray test chamber, set at 35 °C, 5% NaCl, test for 720 hrs.
2. After the test, rinse the coated panel with clean warm water and dry immediately at 23 °C.
3. Evaluate whether the corrosion width exceeds 2 mm, and if more than 2 mm, judged as failed.

### • Film thickness according to ISO 2808

1. Select three points and test the thickness of the film with the film thickness meter which is PICOGLOSS 503 from ERICHSEN.
2. Take the average of the three points.
3. The method has a standard deviation of ± 5 µm.

### • Adhesion according to ISO 4624

1. Select the corresponding knife width according to the film thickness, (0-60 µm 1 mm spacing; 61-120 µm 2 mm spacing; 121-250 µm 3 mm spacing; more than 250 um 5 mm spacing).
2. The knife was held perpendicular to the panel with uniform force, and 6 transverse and longitudinal cuts were made, each cut exposing the substrate. The angle between the transverse and longitudinal cutting lines is 90°.
3. A soft brush was used to gently brush along the grid lines to remove paint chips. 3M Scotch 250 adhesive tape was placed on top of the cut panel surface, and was flattened on the grid area using fingers. The length of the tape was at least 20 mm more than the grid. Within 5 minutes of putting on the tape, hold the suspended end of the tape and remove the tape smoothly within 0.5 to 1.0 s at an angle as close to 60° as possible.
4. The result was judged according to ISO2409:2007

### Epoxy-based intumescent powder coatings

The intumescent powder coating compositions described in Table 1 below were prepared. Examples 1-9 illustrate intumescent powder coatings comprising different types of epoxy resins cured with DICY. Examples 10-13 illustrate intumescent powder coatings comprising epoxy type 3 resin cured with different types of epoxy curing agents. All intumescent powder coatings were prepared with a targeted film thickness of 370-390 µm. The test results are also shown in Table 1 wherein FF means failed fire resistance test after water immersion, hydrothermal aging or NSS test. This was expected due to the lack of primer and topcoat.

As shown in Table 1, the coatings prepared had a thickness of 372 to 390 µm, which is excellent. Moreover, all of the powder coating compositions were able to achieve a film thickness as high as approx. 700 µm by the combination of spraying with a corona gun and positively charged gun spraying.

The results show that epoxy-based intumescent coatings comprising ammonium polyphosphate, melamine, pentaerythritol and carbon fiber had excellent heat insulation/fire resistant properties. All coatings were able to keep the temperature below 400 °C on the backside of the coated panel for more than 30 minutes.

The results show that the epoxy-based intumescent powder coatings with different curing agents have good fire resistance by preventing heat transfer to the underlying substrate, although different curing agents provide different levels of fire resistance. The highest level of fire resistance was obtained using DICY as curing agents for epoxy resin.

The results also show that different epoxy resins provide coatings with different heat insulation properties. The epoxy resins giving the best fire resistance were epoxy type 2, type 3, type 3.5, type 4, type 7, and Novalac resin with EEW 500-575.

**Table 1: Epoxy-based fireproof/intumescent coatings**

| Example | 1 | 2 | 3 | 4 | 5 | 6 | 7 | 8 | 9 | 10 | 11 | 12 | 13 |
|---|---|---|---|---|---|---|---|---|---|---|---|---|---|
| Component (wt%) | | | | | | | | | | | | | |
| Epoxy type 2 EEW 500-550 | 55.4 | | | | | | | | | | | | |
| Epoxy type 2 EEW 600-700 | | 55.8 | | | | | | | | | | | |
| Epoxy type 3 EEW 740-800 | | | 56.3 | | | | | | | 56.3 | 55.7 | 48.1 | 55.7 |
| Epoxy type 3.5 EEW 800-900 | | | | 56.4 | | | | | | | | | |
| Epoxy type 4 EEW 900-1000 | | | | | 566 | | | | | | | | |
| Epoxy type 7 EEW:1750-1950 | | | | | | 57.2 | | | | | | | |
| O-cresol epoxy EEW 190-220 | | | | | | | 52 | | | | | | |
| Novolac EEW 500-575 | | | | | | | | 55.4 | | | | | |
| Novolac EEW 750-850 | | | | | | | | | 56.4 | | | | |
| DICY | 2.6 | 2.2 | 1.7 | 1.6 | 1.4 | 0.8 | 6 | 2.6 | 1.6 | | | | |
| OTB | | | | | | | | | | 1.7 | | | |
| 2-Phenyl-2-imidazoline | | | | | | | | | | | 2.3 | | |
| Phenolic hardener | | | | | | | | | | | | 9.9 | |
| 1,2,4,5-Benzenetetracarboxylic anhydride (PMDA) | | | | | | | | | | | | | 2.3 |
| Ferro-manganese black | 4 | 4 | 4 | 4 | 4 | 4 | 4 | 4 | 4 | 4 | 4 | 4 | 4 |
| 2-methylimidazole | | | | | | | | | | | | 0.1 | |
| Ammonium polyphosphate | 20.2 | 20.2 | 20.2 | 20.2 | 20.2 | 20.2 | 20.2 | 20.2 | 20.2 | 20.2 | 20.2 | 20.2 | 20.2 |
| Melamine | 6.9 | 6.9 | 6.9 | 6.9 | 6.9 | 6.9 | 6.9 | 6.9 | 6.9 | 6.9 | 6.9 | 6.9 | 6.9 |
| Pentaerythritol | 6.9 | 6.9 | 6.9 | 6.9 | 6.9 | 6.9 | 6.9 | 6.9 | 6.9 | 6.9 | 6.9 | 6.9 | 6.9 |
| Carbon fiber 2 | 4 | 4 | 4 | 4 | 4 | 4 | 4 | 4 | 4 | 4 | 4 | 4 | 4 |
| Test results | | | | | | | | | | | | | |
| THI below 400 °C (Min) | >40 | >40 | 38 | >40 | >40 | >40 | 34 | >40 | 32 | 33 | 38 | 31 | 35 |
| Actual thickness (µm) | 370 | 375 | 373 | 385 | 382 | 390 | 383 | 378 | 381 | 378 | 372 | 378 | 379 |
| Film thickness of 700 µm achieved in one coat? | Yes | Yes | Yes | Yes | Yes | Yes | Yes | Yes | Yes | Yes | Yes | Yes | Yes |
| Water immersion | FF | FF | FF | FF | FF | FF | FF | FF | FF | FF | FF | FF | FF |
| Hydrothermal aging | FF | FF | FF | FF | FF | FF | FF | FF | FF | FF | FF | FF | FF |
| NSS test width of corrosion (mm) | FF | FF | FF | FF | FF | FF | FF | FF | FF | FF | FF | FF | FF |
| | 4.7 | 5.2 | 5.9 | 4.7 | 6.1 | 5.7 | 5.8 | 4.9 | 6.5 | 5.4 | 4.1 | 4.9 | 5.7 |

### Epoxy resin and polyester resin based coatings

The intumescent powder coating compositions (Examples 14-16) described below in Table 2 were prepared comprising different types of binder, specifically epoxy resin and saturated carboxy functional polyester. The intumescent powder coatings were prepared with a targeted film thickness of 370-390 µm. FF means failed fire resistance test after water immersion, hydrothermal aging or NSS test. This was expected due to the lack of primer and topcoat.

**Table 2 Fireproof coating with hybrid system**

| Example | 14 | 15 | 16 |
|---|---|---|---|
| Component (wt%) | | | |
| Saturated polyester 2 (AV 32-38 mgKOH/g) | 46.0 | | |
| Saturated polyester 4 (AV 48-56 mgKOH/g) | | 34.8 | |
| Saturated polyester 6 (AV 68-76 mgKOH/g) | | | 36.2 |
| Epoxy type 3 (EEW 740-800) | 12.0 | 23.2 | 21.8 |
| Ferro-manganese black | 4 | 4 | 4 |
| Ammonium polyphosphate | 20.2 | 20.2 | 20.2 |
| Melamine | 6.9 | 6.9 | 6.9 |
| Pentaerythritol | 6.9 | 6.9 | 6.9 |
| Carbon fiber 2 | 4 | 4 | 4 |
| Test results | | | |
| THI below 400 °C (Min) | 38 | 32 | 32 |
| Actual thickness (µm) | 389 | 378 | 382 |
| Film thickness of 700 µm achieved in one coat? | Yes | Yes | Yes |
| Water immersion | FF | FF | FF |
| Hydrothermal aging | FF | FF | FF |
| NSS test width of corrosion (mm) | FF | FF | FF |
| | 7.2 | 6.5 | 7.9 |

The coatings prepared had a thickness of 378 to 389 µm, and all intumescent powder coating compositions could achieve a film thickness as high as approx. 700 µm by the combination of spraying with a corona gun and a positively charged gun.

The results show that intumescent powder coating compositions comprising a mixture of binders, ammonium polyphosphate, melamine, pentaerythritol and carbon fiber yield coatings having excellent fire-resistant properties by preventing heat transfer to the underlying substrate. All coatings were able to keep the temperature below 400 °C on the backside of the coated panel for more than 30 minutes, with example 14 performing the strongest.

### Polyester resin based coatings

Examples 17-22, which are described in Table 3 below, illustrate intumescent powder coatings comprising different types of polyester binder. The powder coatings were prepared with a targeted film thickness of 370-390 µm. The test results are also reported in Table 3, wherein FF means failed the fire resistance test after water immersion, hydrothermal aging or NSS test. This was expected due to the lack of primer and topcoat.

**Table 3 Polyester-based intumescent/fireproof coatings**

| Example | 17 | 18 | 19 | 20 | 21 | 22 |
|---|---|---|---|---|---|---|
| Component (wt%) | | | | | | |
| Saturated polyester 1 (AV18-25 mgKOH/g) | 52 | | | 52.2 | | |
| Saturated polyester 3 (AV 32-38 mgKOH/g) | | 55 | | | 56.26 | |
| Saturated polyester 5 (AV 48-56 mgKOH/g) | | | 54.6 | | | 51.3 |
| TGIC | 2.1 | 3 | 3.4 | | | |
| β-hydroxy alkyl amide | | | | 1.9 | 1.74 | 2.8 |
| Ferro-manganese black | 4 | 4 | 4 | 4 | 4 | 4 |
| Ammonium polyphosphate | 22.7 | 20.2 | 20.2 | 22.7 | 20.2 | 22.7 |
| Melamine | 7.6 | 6.9 | 6.9 | 7.6 | 6.9 | 7.6 |
| Pentaerythritol | 7.6 | 6.9 | 6.9 | 7.6 | 6.9 | 7.6 |
| Carbon fiber 2 | 4 | 4 | 4 | 4 | 4 | 4 |
| Test result | | | | | | |
| THI below 400 °C (Min) | 33 | 32 | 31 | 34 | 31 | 32 |
| Actual thickness (µm) | 385 | 378 | 388 | 382 | 381 | 388 |
| Film thickness of 700 µm achieved in one coat? | Yes | Yes | Yes | Yes | Yes | Yes |
| Water immersion | FF | FF | FF | FF | FF | FF |
| Hydrothermal aging | FF | FF | FF | FF | FF | FF |
| NSS test width of corrosion (mm) | FF | FF | FF | FF | FF | FF |
| | 7.9 | 6.3 | 7.1 | 6.2 | 6.5 | 6.9 |

The resulting intumescent powder coatings had a thickness of 378 to 388 µm, and all intumescent powder coating compositions could achieve a film thickness as high as approx. 700 µm by the combination of corona gun and a positively charged gun spraying.

The results show that pure polyester coatings (i.e. polyester as the sole binder) comprising ammonium polyphosphate, melamine, pentaerythritol and carbon fiber have excellent fire-resistant properties due to the ability to prevent heat transfer to the underlying substrate. All coatings were able to keep the temperature below 400 °C on the backside of the coated panel for more than 30 minutes.

Although polyester resins cured with TGIC or HAA meet the key requirement of heat insulation, epoxy-based intumescent powder coatings, as described above, perform slightly better.

### Intumescent powder coatings with different types of carbon fiber and content of carbon fiber

Examples 24-32 illustrate intumescent powder coating compositions and coatings with different types of carbon fiber and content of carbon fiber in an epoxy-based binder system. Comparative example 1 comprises no carbon fiber, but is otherwise very similar to examples 24-32. The test results are shown in Table 4, wherein FF means failed fire resistance test after water immersion, hydrothermal aging or NSS test. This was expected due to the lack of primer and topcoat.

**Table 4 Fireproof coating with different types of carbon fiber and content of carbon fiber**

| Example | CE1 | 24 | 25 | 3 | 26 | 27 | 28 | 29 | 30 | 31 | 32 |
|---|---|---|---|---|---|---|---|---|---|---|---|
| Component (wt%) | | | | | | | | | | | |
| Epoxy type 3 EEW 740-800 | 58.6 | 57.6 | 56.9 | 56.3 | 55.7 | 55.1 | 54.4 | 56.3 | 56.3 | 56.3 | 56.3 |
| DICY | 1.8 | 1.7 | 1.7 | 1.7 | 1.7 | 1.7 | 1.7 | 1.7 | 1.7 | 1.7 | 1.7 |
| Ferro-manganese black | 4.2 | 4.1 | 4 | 4 | 4 | 4 | 3.9 | 4 | 4 | 4 | 4 |
| Ammonium polyphosphate | 21 | 20.6 | 20.4 | 20.2 | 20 | 19.8 | 19.6 | 20.2 | 20.2 | 20.2 | 20.2 |
| Melamine | 7.2 | 7 | 7 | 6.9 | 6.8 | 6.7 | 6.7 | 6.9 | 6.9 | 6.9 | 6.9 |
| Pentaerythritol | 7.2 | 7 | 7 | 6.9 | 6.8 | 6.7 | 6.7 | 6.9 | 6.9 | 6.9 | 6.9 |
| Carbon fiber 2 (0.2 mm) | | 2 | 3 | 4 | 5 | 6 | 7 | | | | |
| Carbon fiber 1 (0.1 mm) | | | | | | | | 4 | | | |
| Carbon fiber 3 (0.3 mm | | | | | | | | | 4 | | |
| Carbon fiber 4 (1 mm) | | | | | | | | | | 4 | |
| Carbon fiber 5 (2 mm) | | | | | | | | | | | 4 |
| Test result | | | | | | | | | | | |
| THI below 400 °C (Min) | 32 | 34 | 35 | 38 | 39 | 41 | 42 | 39 | 40 | 38 | 44 |
| Actual film thickness (µm) | 376 | 378 | 389 | 372 | 379 | 388 | 382 | 375 | 381 | 386 | 379 |
| Maximum achievable thickness (µm) by one coat | 250 | 450 | 550 | 700 | 750 | 800 | 850 | 700 | 700 | 700 | 700 |
| Water immersion | FF | FF | FF | FF | FF | FF | FF | FF | FF | FF | FF |
| Hydrothermal aging | FF | FF | FF | FF | FF | FF | FF | FF | FF | FF | FF |
| NSS test width of corrosion (mm) | FF | FF | FF | FF | FF | FF | FF | FF | FF | FF | FF |
| | 7.3 | 6.7 | 7.9 | 7.2 | 7.5 | 6.8 | 6.9 | 7.5 | 7.2 | 8.1 | 7.9 |

The coating thicknesses of examples 3 and 24-32 were controlled when applying the powder coating composition (time and/or amount) to target a film thickness of 370-390 µm for all examples. In contrast to this, Comparative Example 1, cannot reach the desired coating thickness. To make a comparable coating, two cycles of application and curing were needed to obtain a film thickness of 376 µm. The maximum achievable thickness by one coat of the composition of CE1 was approximately 250 µm.

The results show that intumescent powder coating compositions and coatings comprising binder, in this case epoxy resin, ammonium polyphosphate, melamine, pentaerythritol and carbon fiber had excellent fire resistance properties due to their ability to prevent heat transfer to the underlying substrate. All coatings were able to keep the temperature below 400 °C on the backside of the coated panel for more than 30 minutes.

The results also show that increasing the carbon fiber content, increases the fire resistance of the coating. Additionally, the maximum thickness of the coating that can be achieved in a single coat is increased.

Furthermore, longer lengths of carbon fiber (e.g. 1 or 2 mm) seems to improve the fire resistance and improve the thickness of coating film.

### Intumescent powder coating with different charging agents

Examples 33 in Table 5 compares an intumescent powder coating composition and coatings with carbon fiber as the charging agent in an epoxy binder system to other conventional charging agents (CE2-CE4). Example 33 was applied to 342 µm by corona gun, to make it comparable in film thickness with examples CE2-CE4 as their maximum film thickness was in the range of 320-370 µm. The test results are shown in Table 5, wherein FF means failed fire resistance test after water immersion, hydrothermal aging or NSS test. This was expected due to the lack of primer and topcoat.

**Table 5: Fireproof coating with different charging agents**

| Example | 33 | CE2 | CE3 | CE4 |
|---|---|---|---|---|
| Component (wt%) | | | | |
| Epoxy type 3 EEW 740-800 | 56.3 | 56.3 | 56.3 | 56.3 |
| DICY | 1.7 | 1.7 | 1.7 | 1.7 |
| Ferro-manganese black | 4 | 4 | 4 | 4 |
| Ammonium polyphosphate | 20.2 | 20.2 | 20.2 | 20.2 |
| Melamine | 6.9 | 6.9 | 6.9 | 6.9 |
| Pentaerythritol | 6.9 | 6.9 | 6.9 | 6.9 |
| Carbon fiber 2 | 4 | | | |
| PEG | | 4 | | |
| Glycerol monostearate | | | 4 | |
| Barium Titanate | | | | 4 |
| Results | | | | |
| THI below 400 °C (Min) | 37 | 32 | 30 | 33 |
| Actual thickness (µm) | 342 | 332 | 320 | 348 |
| Maximum achievable thickness by one coat (µm) | 700 | 350 | 320 | 370 |
| Water immersion | FF | FF | FF | FF |
| Hydrothermal aging | FF | FF | FF | FF |
| NSS test width of corrosion (mm) | FF | FF | FF | FF |
| | 7.9 | 6.5 | 7.4 | 6.8 |

The results show that carbon fiber is a significantly better charging agent than the other charging agents (i.e. PEG, glycerol monostearate, barium titanate) for obtaining a higher film thickness in a single coat. In contrast to comparative examples CE2-CE4, which only can achieve a maximum film thickness of 320-370 µm by one coat, example 33 can achieve a maximum film thickness of 700 µm.

### Intumescent powder coating with different ratios of ammonium polyphosphate, melamine and pentaerythritol

Examples 34-38 illustrate intumescent powder coatings with different ratios of ammonium polyphosphate, melamine and pentaerythritol in an epoxy binder system. The intumescent powder coatings were prepared with a targeted film thickness of 370-390 µm. The test results are shown in Table 6, wherein FF means failed the fire resistance test after water immersion, hydrothermal aging or NSS test. This was expected due to the lack of primer and topcoat.

**Table 6: Fireproof coating with different ratios of APP, melamine and pentaerythritol**

| Example | 34 | 35 | 36 | 37 | 38 |
|---|---|---|---|---|---|
| Component (wt%) | | | | | |
| Epoxy type 3 EEW 740-800 | 56.3 | 56.3 | 56.3 | 56.3 | 56.3 |
| DICY | 1.7 | 1.7 | 1.7 | 1.7 | 1.7 |
| Ferro-manganese black | 4 | 4 | 4 | 4 | 4 |
| Ammonium polyphosphate | 24.8 | 16.6 | 24.8 | 16.6 | 33.1 |
| Melamine | 0 | 11 | 8.3 | 5.5 | 0 |
| Pentaerythritol | 8.3 | 5.5 | 0 | 11 | 0 |
| Carbon fiber 2 | 4 | 4 | 4 | 4 | 4 |
| Results | | | | | |
| THI below 400 °C (Min) | 33 | 40 | 35 | 35 | 42 |
| Actual thickness (µm) | 379 | 372 | 378 | 382 | 387 |
| Film thickness of 700 µm achieved in one coat? | Yes | Yes | Yes | Yes | Yes |
| Water immersion | FF | FF | FF | FF | FF |
| Hydrothermal aging | FF | FF | FF | FF | FF |
| NSS test width of corrosion (mm) | FF | FF | FF | FF | FF |
| | 7.1 | 7.5 | 6.4 | 6.3 | 7.3 |

The results in Table 6 show that ammonium polyphosphate as the sole intumescent component results in coatings with good heat insulation. The combination of ammonium polyphosphate and melamine, without pentaerythritol, or the combination of ammonium polyphosphate and pentaerythritol, without melamine, both give good heat insulation.

### Intumescent powder coating in different coating binder systems

Different primer and topcoat powder coating compositions were prepared as shown in Table 7 and Table 8 below, respectively.

**Table 7: Primer powder coating compositions**

| Example | P1 | P2 | P3 | P4 |
|---|---|---|---|---|
| Component (wt%) | | | | |
| Epoxy type 3 EEW 740-800 | 58.0 | 18.0 | 24.0 | 30.0 |
| Saturated carboxyl polyester 2 (AV 32-38 mgKOH/g) | | 42.0 | | |
| Saturated carboxyl polyester 4 (AV 48-56 mgKOH/g) | | | 36.0 | |
| Saturated carboxyl polyester 6 (AV 68-76 mgKOH/g) | | | | 30.0 |
| OTB | 2.5 | | | |
| Levelling agent | 0.8 | 0.8 | 0.8 | 0.8 |
| Benzoin | 0.2 | 0.2 | 0.2 | 0.2 |
| Carbon black | 0.6 | 0.6 | 0.6 | 0.6 |
| feldspar | 37.9 | 38.4 | 38.4 | 38.4 |
| Actual thickness (µm) | 85 | 90 | 88 | 92 |

**Table 8: Topcoat powder coating compositions**

| Example | TC1 | TC2 | TC3 | TC4 | TC5 | TC6 | TC7 |
|---|---|---|---|---|---|---|---|
| Component (wt%) | | | | | | | |
| Epoxy type 3 (EEW 740-800) | 58.0 | 18.0 | 24.0 | 30.0 | | | |
| Saturated carboxyl polyester 1(AV 18-25 mgKOH/g | | | | | 57.6 | | |
| Saturated carboxyl polyester 3(AV 32-38 mgKOH/g | | | | | | 55.8 | |
| Saturated carboxyl polyester 2(AV 32-38 mgKOH/g | | 42.0 | | | | | |
| Saturated carboxyl polyester 5(AV 32-38 mgKOH/g | | | | | | | 54 |
| Saturated carboxyl polyester 4(AV 48-56 mgKOH/g) | | | 36.0 | | | | 54.0 |
| Saturated carboxyl polyester 6(AV 68-76 mgKOH/g) | | | | 30.0 | | | |
| TGIC | | | | | 2.4 | 4.2 | 6.0 |
| OTB | 2.5 | | | | | | |
| Levelling agent | 0.8 | 0.8 | 0.8 | 0.8 | 0.8 | 0.8 | 0.8 |
| Benzoin | 0.2 | 0.2 | 0.2 | 0.2 | 0.2 | 0.2 | 0.2 |
| Carbon black | 0.6 | 0.6 | 0.6 | 0.6 | 0.6 | 0.6 | 0.6 |
| feldspar | 37.9 | 38.4 | 38.4 | 38.4 | 38.4 | 38.4 | 38.4 |
| Actual thickness (µm) | 152 | 163 | 171 | 158 | 177 | 156 | 170 |

Examples 39-90 show fire resistance of different coating systems. The primer layers were prepared with a targeted film thickness of 80-100 µm. The intumescent powder coating layers were prepared with a targeted film thickness of 370-390 µm. The topcoat layers were prepared with a targeted film thickness of 160-180 µm. The test results are shown in Tables 9-16.

**Table 9: One coat only**

| Example | 39 | 40 | 41 |
|---|---|---|---|
| Type of layer | Only primer | Only mid-coat | Only topcoat |
| | P1 | 3 | TC1 |
| Test results | | | |
| THI below 400°C (Min) (before exposure tests) | <1 | 38 | <1 |
| Water immersion | Pass | Adhesion Gt 5, fireproof test< 1min | Pass |
| Hydrothermal aging | Pass | Adhesion Gt 5, fireproof test< 1min | Pass |
| NSS test - width of corrosion (mm) | Pass, 1.2 | Fail, 5.8 | Pass, 1.2 |

The intumescent powder coating easily passes the heat insulation test, but fails in all other tests. On the other hand, both the primer powder coating and the topcoat powder composition pass water immersion, hydrothermal aging, and corrosion test, but fail in the heat insulation test.

**Table 10: Two-layer powder coating systems: Primer + intumescent coat**

| Example | 42 | 43 | 44 | 45 | 46 | 47 |
|---|---|---|---|---|---|---|
| **Primer coating** | P1 | P1 | P1 | P1 | P1 | P1 |
| Thickness (µm) | 88 | 91 | 93 | 87 | 89 | 90 |
| **Intumescent coating** | 3 | 14 | 15 | 16 | 19 | 21 |
| Thickness (µm) | 378 | 389 | 382 | 376 | 375 | 388 |
| Test results | | | | | | |
| THI below 400 °C (Min) (bf. exposure tests) | 38 | 38 | 32 | 32 | 31 | 31 |
| Water immersion | FF | FF | FF | FF | FF | FF |
| Hydrothermal aging | FF | FF | FF | FF | FF | FF |
| NSS test width of corrosion (mm) | FF | FF | FF | FF | FF | FF |
| | 1.0 | 1.2 | 1.4 | 1.1 | 0.8 | 1.4 |

The two-layer coating systems comprising a primer layer and an intumescent layer showed good heat insulation before different exposure tests but failed after these tests (FF means fails fire resistance test after water immersion, hydrothermal aging or NSS test). Corrosion resistance of the tested systems was good.

**Table 11: Two-layer powder coating systems: Intumescent coat + topcoat**

| Example | 48 | 49 | 50 | 51 | 52 | 53 |
|---|---|---|---|---|---|---|
| **Intumescent coat** | 3 | 14 | 15 | 16 | 19 | 21 |
| Thickness(µm) | 372 | 378 | 381 | 376 | 385 | 374 |
| **Epoxy topcoat** | TC1 | TC1 | TC1 | TC1 | TC1 | TC1 |
| Thickness(µm) | 163 | 171 | 174 | 165 | 178 | 167 |
| Test result | | | | | | |
| THI below 400 °C (Min) (bf. exposure tests) | 38 | 38 | 32 | 32 | 31 | 31 |
| Water immersion | FF | FF | FF | FF | FF | FF |
| Hydrothermal aging | FF | FF | FF | FF | FF | FF |
| NSS test Width of corrosion (mm) | FF | FF | FF | FF | FF | FF |
| | 3.0 | 3.2 | 3.4 | 3.1 | 3.8 | 3.7 |

The two-layer coating systems comprising an intumescent layer and a topcoat layer showed good heat insulation before the exposure tests but failed after these tests (FF means fails fire resistance test after water immersion, hydrothermal aging or NSS test). Additionally, the tested systems failed in corrosion testing.

**Table 12: Epoxy primer + intumescent coat + epoxy topcoat**

| Example | 54 | 55 | 56 | 57 | 58 | 59 | 60 | 61 | 62 | 63 |
|---|---|---|---|---|---|---|---|---|---|---|
| **Primer coating** | P1 | P1 | P1 | P1 | P1 | P1 | P1 | P1 | P1 | P1 |
| Thickness (µm) | 87 | 93 | 88 | 89 | 94 | 88 | 94 | 92 | 86 | 85 |
| **Intumescent coating** | 3 | 14 | 15 | 16 | 17 | 18 | 19 | 20 | 21 | 22 |
| Thickness (µm) | 375 | 387 | 389 | 379 | 381 | 376 | 388 | 384 | 373 | 378 |
| **Topcoat** | TC1 | TC1 | TC1 | TC1 | TC1 | TC1 | TC1 | TC1 | TC1 | TC1 |
| Thickness (µm) | 161 | 176 | 172 | 175 | 165 | 164 | 170 | 165 | 178 | 173 |
| Test results | | | | | | | | | | |
| THI below 400 °C (Min)(bf. exposure test) | 38 | 38 | 32 | 32 | 33 | 30 | 30 | 32 | 31 | 32 |
| Water immersion | NC | NC | NC | NC | NC | NC | NC | NC | NC | NC |
| Hydrothermal aging | NC | NC | NC | NC | NC | NC | NC | NC | NC | NC |
| NSS test width of corrosion (mm) | NC | NC | NC | NC | NC | NC | NC | NC | NC | NC |
| | 0.8 | 0.7 | 0.5 | 0.9 | 0.6 | 0.7 | 0.4 | 0.7 | 0.4 | 0.8 |

| | | | | | | | | | | |
|---|---|---|---|---|---|---|---|---|---|---|
| Note: NC means no change for fire resistance as a result of exposure, i.e. meets heat insulation requirements. | | | | | | | | | | |

Three-layer powder coating systems according to the present invention were prepared with the compositions shown in Table 12 above. Both the primer layer and the topcoat layer were epoxy-based, whereas the intumescent layer was based on different binders. By way of example, the intumescent coating in example 54 is an epoxy binder cured with DICY, while example 55 comprises a hybrid of polyester resin and epoxy resin, etc.

All three-layer powder coating systems provide more than 30 mins heat insulation, both before and after the different exposure tests (water immersion test, hydrothermal aging test and neutral salt spray test). No changes in heat insulation performance were observed. Furthermore, all three-layer coating systems passed the neutral salt spray test with a corrosion width of less than 2 mm, i.e. corrosion resistance was very good.

**Table 13: Epoxy primer + Epoxy intumescent + pure polyester and hybrid topcoat**

| Example | 64 | 65 | 66 | 67 | 68 | 69 |
|---|---|---|---|---|---|---|
| **Primer coating** | P1 | P1 | P1 | P1 | P1 | P1 |
| Thickness (µm) | 87 | 91 | 90 | 85 | 92 | 94 |
| **Intumescent coating** | **3** | 3 | 3 | 3 | 3 | 3 |
| Thickness (µm) | 382 | 388 | 377 | 375 | 381 | 388 |
| **Topcoat** | TC2 | TC3 | TC4 | TC5 | TC6 | TC7 |
| Thickness (µm) | 172 | 163 | 174 | 179 | 167 | 162 |
| Test result | | | | | | |
| THI below 400°C (Min) (after exposure test) | 37 | 36 | 38 | 37 | 38 | 36 |
| Water immersion | NC | NC | NC | NC | NC | NC |
| Hydrothermal aging | NC | NC | NC | NC | NC | NC |
| NSS test | NC | NC | NC | NC | NC | NC |
| Width of corrosion (mm) | 0.5 | 0.8 | 0.7 | 0.9 | 0.7 | 0.8 |

| | | | | | | |
|---|---|---|---|---|---|---|
| Note: NC means no change for fire resistance as a result of exposure, i.e. meets heat insulation requirements. | | | | | | |

Three-layer powder coating systems according to the present invention were prepared with the compositions shown in Table 13 above. Both the primer layers and the intumescent layers were epoxy-based, cured with OTB or DICY, respectively. The topcoat layers of examples 64-66 were hybrid or mixed systems of different polyester resins and epoxy type 3 resin, while the topcoat layers of examples 67-69 were pure polyester resins cured with TGIC.

All three-layer powder coating systems provided more than 30 mins heat insulation both before and after the different exposure tests (water immersion test, hydrothermal aging test and neutral salt spray test). No changes to heat insulation performance were observed. Furthermore, all three-layer systems passed the neutral salt spray test with a corrosion width of less than 2 mm, i.e. corrosion resistance was very good.

**Table 14 Hybrid primer + epoxy intumescent coat + Topcoat**

| Example | 70 | 71 | 72 | 73 | 74 | 75 | 76 |
|---|---|---|---|---|---|---|---|
| **Primer coating** | P2 | P2 | P2 | P2 | P2 | P2 | P2 |
| Thickness (µm) | 85 | 95 | 90 | 92 | 88 | 93 | 87 |
| **Intumescent coating** | 3 | 3 | 3 | 3 | 3 | 3 | 3 |
| Thickness (µm) | 385 | 375 | 388 | 372 | 384 | 376 | 389 |
| **Topcoat** | TC1 | TC2 | TC3 | TC4 | TC5 | TC6 | TC7 |
| Thickness (µm) | 169 | 171 | 164 | 176 | 167 | 173 | 169 |
| Test results | | | | | | | |
| THI below 400 °C (Min) after exposure test | 31 | 34 | 33 | 32 | 30 | 35 | 32 |
| Water immersion | NC | NC | NC | NC | NC | NC | NC |
| Hydrothermal aging | NC | NC | NC | NC | NC | NC | NC |
| NSS test | NC | NC | NC | NC | NC | NC | NC |
| Width of corrosion (mm) | 1.0 | 0.8 | 0.9 | 1.2 | 0.8 | 0.9 | 1.2 |

| | | | | | | | |
|---|---|---|---|---|---|---|---|
| Note: NC means no change for fire resistance as a result of exposure, i.e. meets heat insulation requirements. | | | | | | | |

Three-layer powder coating systems according to the present invention were prepared with the compositions shown in Table 14 above. The primer layers were a hybrid of polyester resin and epoxy resin, and the intumescent layers were epoxy-based, cured with DICY. The topcoat layer of example 70 was epoxy cured with OTB, the topcoat layers of examples 71-73 were hybrid systems of different polyester resins and epoxy type 3 resin, while the topcoat layers of examples 74-76 were pure polyester resins cured with TGIC.

All three-layer powder coating systems provided more than 30 mins heat insulation both before and after the different exposure tests (water immersion test, hydrothermal aging test and neutral salt spray test). No changes to heat insulation performance were observed. Furthermore, all three-layer systems passed the neutral salt spray test with a corrosion width of less than 2 mm, i.e. corrosion resistance was very good.

**Table 15 Hybrid primer + epoxy intumescent coat + topcoat**

| Example | 77 | 78 | 79 | 80 | 81 | 82 | 83 |
|---|---|---|---|---|---|---|---|
| **Primer coating** | P3 | P3 | P3 | P3 | P3 | P3 | P3 |
| Thickness (µm) | 89 | 95 | 85 | 88 | 87 | 86 | 91 |
| **Intumescent coating** | 3 | 3 | 3 | 3 | 3 | 3 | 3 |
| Thickness (µm) | 389 | 378 | 386 | 376 | 384 | 383 | 371 |
| **Topcoat** | TC1 | TC2 | TC3 | TC4 | TC5 | TC6 | TC7 |
| Thickness (µm) | 168 | 179 | 167 | 162 | 179 | 170 | 173 |
| Test results | | | | | | | |
| THI below 400°C (Min) (after exposure tests) | 32 | 33 | 34 | 31 | 35 | 34 | 33 |
| Water immersion | NC | NC | NC | NC | NC | NC | NC |
| Hydrothermal aging | NC | NC | NC | NC | NC | NC | NC |
| NSS test | NC | NC | NC | NC | NC | NC | NC |
| Width of corrosion (mm) | 1.2 | 1.3 | 0.9 | 1.2 | 1.3 | 0.9 | 1.1 |

| | | | | | | | |
|---|---|---|---|---|---|---|---|
| Note: NC means no change for fire resistance as a result of exposure, i.e. meets heat insulation requirements. | | | | | | | |

Three-layer powder coating systems according to the present invention were prepared with the compositions shown in Table 15 above. The primer layers were a hybrid of polyester resin and epoxy resin, and the intumescent layers were epoxy-based cured with DICY. The topcoat layer of example 77 was epoxy cured with OTB, the topcoat layers of examples 78-80 were hybrid systems of different polyester resins and epoxy type 3 resin, while the topcoat layers of examples 81-83 were pure polyester resins cured with TGIC.

All three-layer powder coating systems provided more than 30 mins heat insulation both before and after the different exposure tests (water immersion test, hydrothermal aging test and neutral salt spray test). No changes to heat insulation performance were observed. Furthermore, all three-layer systems passed the neutral salt spray test with a corrosion width of less than 2 mm, i.e. corrosion resistance was very good.

**Table 16 Hybrid primer + epoxy intumescent coat + topcoat**

| Example | 84 | 85 | 86 | 87 | 88 | 89 | 90 |
|---|---|---|---|---|---|---|---|
| **Primer coating** | P4 | P4 | P4 | P4 | P4 | P4 | P4 |
| Thickness (µm) | 93 | 88 | 85 | 87 | 89 | 92 | 95 |
| **Intumescent coating** | 3 | 3 | 3 | 3 | 3 | 3 | 3 |
| Thickness (µm) | 388 | 381 | 380 | 372 | 387 | 385 | 384 |
| **Topcoat** | TC1 | TC2 | TC3 | TC4 | TC5 | TC6 | TC7 |
| Thickness (µm) | 178 | 173 | 168 | 175 | 170 | 165 | 177 |
| Test results | | | | | | | |
| THI below 400 °C (Min) (after exposure test) | 32 | 30 | 32 | 33 | 33 | 32 | 31 |
| Water immersion | NC | NC | NC | NC | NC | NC | NC |
| Hydrothermal aging | NC | NC | NC | NC | NC | NC | NC |
| NSS test | NC | NC | NC | NC | NC | NC | NC |
| width of corrosion (mm) | 1.1 | 1.3 | 1.4 | 1.2 | 1.1 | 0.9 | 1.3 |

| | | | | | | | |
|---|---|---|---|---|---|---|---|
| Note: NC means no change for fire resistance as a result of exposure, i.e. meets heat insulation requirements. | | | | | | | |

Three-layer powder coating systems according to the present invention were prepared with the compositions shown in Table 16 above. The primer layers were a hybrid of polyester resin and epoxy resin, and the intumescent layers were epoxy-based cured with DICY. The topcoat layer of example 84 was an epoxy resin cured with OTB, the topcoat layers of examples 85-87 were hybrid systems of different polyester resins and epoxy type 3 resin, while the topcoat layers of examples 88-90 were pure polyester resins cured with TGIC.

All three-layer powder coating systems provided more than 30 mins heat insulation both before and after the different exposure tests (water immersion test, hydrothermal aging test and neutral salt spray test). No changes to heat insulation performance were observed. Furthermore, all three-layer systems passed the neutral salt spray test with a corrosion width of less than 2 mm, i.e. corrosion resistance was very good.

### Expansion rate of three-layer coating systems

The examples below show the expansion rate of a three-layer powder coating system according to the present invention and a commercial liquid intumescent coating system. The composition of the three-layer powder coating system of the invention is shown in Table 17 below, along with the composition of the comparative liquid coating.

For the comparative liquid coating, Jotacoate F60 from Jotun was applied as primer at a thickness of 85 µm, and dried for one day. Then Steelmaster 120SB from Jotun was applied as intumescent coating at a thickness of 395 µm, and dried for seven days. Then Hardtop XP from Jotun was applied as topcoat at a thickness of 165 µm, and dried for one day.

**Table 17 Comparison of expansion rate between three-layer powder intumescent coating system and liquid intumescent coating system**

| | 91 | Liquid intumescent coating |
|---|---|---|
| **Primer coating** | P1 | Jotacoat F60 |
| Thickness (µm) | 88 | 85 |
| **Intumescent coating** | 3 | Steelmaster 120SB |
| Thickness (µm) | 378 | 395 |
| **Topcoat** | TC1 | Hardtop XP |
| Thickness (µm) | 171 | 165 |

| Test results | | |
|---|---|---|
| Thickness before THI test | 637 µm | 645 µm |
| Thickness after THI test | 8.2 mm | 36.2 mm |
| Expansion rate | 13 times | 55 times |
| THI below 400 °C (Min) (after exposure test) | 38 | 37 |

Thickness before exposure was measured by a film thickness meter, and the thickness after exposure was tested using a Vernier calliper.

The expansion rate of the three-layer powder coating system according to the present invention was 13 times its initial film thickness. This is much less than that observed for a liquid intumescent system as exemplified by the liquid intumescent coating system above which expanded 55 times compared to its initial film thickness. Despite the different expansion rates, both system provided approximately the same heat insulation performance. Given the limited space of an EV battery pack, it is preferred to use an intumescent coating that will give full protection using less space to expand.

## Claims

1. A powder coating composition, preferably an intumescent powder coating composition, comprising:
(i) a binder system comprising a binder and a curing agent;
(ii) an intumescent component comprising an acid-generating agent, preferably ammonium polyphosphate, and optionally an expansion agent and/or a carbon donor compound; and
(iii) a charging agent comprising carbon fiber.

2. A composition as claimed in claim 1, wherein said binder is selected from epoxy resin, polyester resin, or combinations thereof.

3. A composition as claimed in claim 1 or 2, wherein said binder comprises epoxy resin and said curing agent is selected from DICY, 2-phenyl-2-imidazoline, OTB, PMDA and phenolic hardener, preferably said curing agent is DICY or OTB.

4. A composition as claimed in any preceding claim, wherein said intumescent component comprises an expansion agent, preferably an expansion agent selected from glycine, melamine, melamine salts, melamine derivatives, urea, urea derivatives, dicyandiamide, guanidine, and isocyanurate derivatives, and particularly preferably melamine.

5. A composition as claimed in any preceding claim, wherein said intumescent component comprises a carbon donor compound selected from pentaerythritol, dipentaerythritol, tripentaerythritol, a polysaccharide (e.g., starch, cellulose, glycogen, and the like), a disaccharide sugar (e.g., sucrose, lactose, maltose), a monosaccharide sugar (e.g., glucose, fructose, galactose), glycerol, or expandable graphite, or any combination thereof, and particularly preferably pentaerythritol.

6. A composition as claimed in any preceding claim comprising an intumescent component comprising ammonium polyphosphate, and optionally melamine and/or pentaerythritol.

7. A composition as claimed in any preceding claim, wherein said carbon fiber has a length of 0.1-2 mm, preferably 0.2-1.6 mm and still more preferably 0.2-1.2 mm.

8. A composition as claimed in any preceding claim, wherein said carbon fiber is present in amount of 2-15 wt%, more preferably 3-8 wt% and still more preferably 3-7 wt%, based on the total weight of the composition.

9. A method for preparing a powder coating composition, and preferably an intumescent powder coating composition, as claimed in any one of claims 1-8 comprising:
(i) blending a binder system comprising a binder and a curing agent, an intumescent component comprising an acid-generating agent, preferably ammonium polyphosphate, and optionally an expansion agent and/or a carbon donor compound, and a charging agent comprising carbon fiber, to form a mixture; and
(ii) extruding said mixture to form particles.

10. A method for coating a substrate, preferably a metal substrate, with a powder coating composition, preferably an intumescent powder coating composition, as claimed in any one of claims 1-8, comprising:
(i) applying a powder coating composition as claimed in any one of claims 1-8 to said substrate, wherein said substrate is preferably pre-coated with a primer layer; and
(ii) curing said powder coating composition to form a layer, preferably an intumescent layer.

11. A coating, preferably a cured coating, comprising a powder coating composition, and preferably an intumescent powder coating composition, as claimed in any one of claims 1-8.

12. A method for coating a substrate, preferably a metal substrate, with a coating system comprising:
(i) applying a primer composition, preferably a powder primer composition, to said substrate and curing said composition to form a primer layer;
(ii) applying an intumescent powder coating composition as claimed in any one of claims 1-8 to said primer layer and curing said composition to form an intumescent layer; and
(iii) applying a topcoat composition, preferably a powder topcoat composition, to said intumescent layer and curing to form a topcoat layer.

13. A coating system comprising, preferably consisting, of three layers, wherein said coating system comprises:
(i) a primer layer, formed on a substrate, preferably a metal substrate;
(ii) an intumescent layer, formed on said primer layer, comprising a powder coating composition as claimed in any one of claims 1-8; and
(iii) a topcoat layer, formed on said intumescent layer.

14. A kit for preparing a coating system as claimed in claim 13, comprising:
(i) a first container containing a primer composition, preferably a powder primer composition;
(ii) a second container containing an intumescent powder coating composition as claimed in any one of claims 1-8; and
(iii) a third container containing a topcoat composition, preferably a powder topcoat composition.

15. A battery pack comprising a battery assembly, wherein said battery pack has a coating formed on at least one surface, preferably an interior surface, and said coating is formed from a coating system as claimed in any one of claims 1-8.
